# EUROPEAN PATENT APPLICATION

(11) **EP 4 838 970 A1**
(43) Date of publication of application: **11.11.2026**
(21) Application number: 25751592.4
(22) Date of filing: 06.02.2025
(51) Int. Cl.: H04W 56/00

(54) **TIMING ADVANCE (TA) ACQUISITION METHOD AND RELATED APPARATUS**

(30) Priority: 07.02.2024 CN 202410175813; 10.05.2024 CN 202410598084
(71) Applicant: Honor Device Co., Ltd., Shenzhen, Guangdong 518040 (CN)
(72) Inventor: TANG, Xiaoxuan, Shenzhen, Guangdong 518040 (CN)
(74) Representative: Henselmann, Alexander Gerhard
(86) International application number: PCT/CN2025/076020
(87) International publication number: WO 2025/167993

(57) **Abstract**

This application provides a timing advance TA obtaining method and a related apparatus. The method includes: A terminal device receives a first message from a network side, where the first message may include at least one of the following: an identifier ID of a cell, a TA, a valid command of the TA, and valid time of the TA. The valid command of the TA indicates that the TA is still valid after the terminal device is switched to the cell, and the TA is used to perform RACH-less access. According to the technical solutions provided in this application, signaling overheads can be reduced.

## Description

This application claims priority to Chinese Patent Application No. 202410175813.8, filed with the China National Intellectual Property Administration on February 7, 2024 and entitled "COMMUNICATION METHOD AND APPARATUS, AND COMPUTER-READABLE STORAGE MEDIUM", and to Chinese Patent Application No. 202410598084.7, filed with the China National Intellectual Property Administration on May 10, 2024 and entitled "TIMING ADVANCE TA OBTAINING METHOD AND RELATED APPARATUS" which are incorporated herein by reference in their entireties.

### TECHNICAL FIELD

This application relates to the field of wireless communication technologies, and in particular, to a timing advance TA obtaining method and a related apparatus.

### BACKGROUND

L1/L2 triggered mobility (L1/L2 triggered mobility, LTM) refers to a scenario where a network side preconfigures a plurality of candidate cells for a terminal device, and based on an L1 measurement result reported by the terminal device, the network side can trigger a mobility management mechanism by using a switch command, so that the terminal device is switched from a source cell to the candidate cell. Before the switch command is sent, the terminal device may be triggered to perform uplink and downlink synchronization.

In R18 uplink synchronization, the network side may trigger uplink synchronization based on a physical downlink control channel (physical downlink control channel, PDCCH) order (order). A specific obtaining procedure of timing advance (timing advance, TA) in uplink synchronization is: The terminal device sends a preamble (preamble) to a 5G NodeB distributed unit (5G NodeB distributed unit, gNB-DU) of the candidate cell. The gNB-DU of the candidate cell obtains, through measurement, TA of the terminal device and sends the TA to a gNB-DU of the source cell via a centralized unit (centralized unit, CU). The gNB-DU of the source cell delivers related TA of a target cell together with an LTM command to the terminal device for random access channel (random access channel, RACH)-less access.

However, in consecutive LTM, a TA obtaining procedure needs to be re-triggered each time cell switch is performed on the terminal device. The TA obtaining procedure is frequently re-triggered a plurality of times, causing high signaling overheads of the terminal device and the network side.

### SUMMARY

Embodiments of this application provide a timing advance TA obtaining method and a related apparatus, to reduce signaling overheads.

According to a first aspect, this application provides a TA obtaining method. The method may be applied to a terminal device, an apparatus in the terminal device (for example, a chip, a chip system, or a circuit), or an apparatus that can be used together with the terminal device. The following description uses an example in which the method is applied to a terminal device. The method may include: A terminal device receives a first message from a network side, where the first message includes at least one of the following: an identifier (identifier, ID) of a cell, a TA, a valid command of the TA, and valid time of the TA; and the valid command of the TA indicates that the TA is still valid after the terminal device is switched to the cell, and the TA is used to perform random access channel RACH-less access.

In this embodiment of this application, when the TA of the cell is valid, the network side sends the first message to the terminal device, and the terminal device may determine, based on one or more of the ID of the cell, the TA, the valid command of the TA, and the valid time of the TA in the first message, to continue to use the valid TA to perform RACH-less access, so as to avoid triggering a TA obtaining procedure of the cell again, and reduce signaling overheads of the terminal device and the network side.

In a possible implementation, after the terminal device receives the first message from the network side, the method further includes: If at least one of the following is met: a time alignment timer (time alignment timer, TAT) starts a corresponding TA and timing times out, a change amplitude of a reference signal receiving power (reference signal receiving power, RSRP) value of the cell is greater than a preset threshold, the terminal device receives a new TA of a gNB-DU of the cell, the terminal device receives a TA invalid order command, or the terminal device receives a PDCCH order for the cell, the terminal device determines that the TA is invalid, where the PDCCH order is used to obtain a TA of the cell. According to this embodiment of this application, validity of the TA of the cell may be maintained by the terminal device, and validity of the TA of the cell may be maintained based on a real-time situation of the terminal device, thereby improving accuracy of RACH-less LTM procedure access.

In a possible implementation, the RSRP value is configured by the network side for the terminal device. Optionally, the RSRP value may be configured by a gNB-DU of a source cell on the network side for the terminal device. Optionally, the RSRP value may be configured by a cell for the terminal, and the cell may be a cell corresponding to the TA.

In a possible implementation, after the terminal device receives the first message from the network side, the method further includes: If at least one of the following is met: timing of the corresponding TA does not time out when the time alignment timer (time alignment timer, TAT) starts, the change amplitude of the reference signal receiving power (reference signal receiving power, RSRP) value of the cell is less than or equal to the preset threshold, the terminal device no longer receives a new TA of the gNB-DU of the cell, the terminal device does not receive the TA invalid order command, or the terminal device does not receive the PDCCH order for the cell, the terminal device determines that the TA is valid, where the PDCCH order is used to obtain the TA of the cell.

In a possible implementation, if the TA is invalid, the method further includes: The terminal device sends a TA invalid order command to the network side, where the TA invalid order command includes the ID of the cell or an ID of a timing advance group (timing advance group, TAG).

In a possible implementation, after the terminal device sends the TA invalid order command to the network side, the method further includes: The terminal device receives a PDCCH order from the network side, where the PDCCH order is used to trigger a TA obtaining procedure; and the terminal device sends a preamble to an indicated cell, where the cell indicated by the PDCCH order is the same cell as a cell corresponding to the TA invalid command. The gNB-DU of the source cell sends the PDCCH order to the terminal device to obtain a valid TA corresponding to the cell, where the cell indicated by the PDCCH order is the same cell as the cell corresponding to the TA invalid command, which may be understood as: The PDCCH order is used to re-obtain the valid TA corresponding to the cell.

In a possible implementation, if the TA is valid, the method further includes: The terminal device sends information about a valid TA to the network side, where the information about the valid TA includes at least one of the following: an order with the valid TA, a list of cells with valid TAs, the TA, and remaining TAT time. If the validity of the TA is maintained on the terminal device side, after accessing the cell, the terminal device may send the existing TA to the gNB-DU of the cell for subsequent RACH-less access, thereby reducing signaling overheads.

In a possible implementation, that the terminal device receives the first message from the network side includes: The terminal device receives the first message from a source cell on the network side. Optionally, the network side may be a CU of the source cell or a DU of the source cell. If the first message is generated by the CU of the source cell, the CU of the source cell may send the first message to the terminal device via the DU of the source cell.

In a possible implementation, the method further includes: The terminal device receives a TA invalid order command from a gNB-DU of the cell, where the TA invalid order command includes the ID of the cell.

In a possible implementation, the first message is carried in downlink control information (downlink control information, DCI), or a radio resource control (radio resource control, RRC) or media access control control element (media access control control element, MAC CE).

According to a second aspect, this application provides a TA obtaining method. The method may be applied to a gNB-DU of a source cell, or may be applied to an apparatus in the gNB-DU of the source cell (for example, a chip, or a chip system, or a circuit) or an apparatus that can be used together with the gNB-DU of the source cell. The following description uses an example in which the method is applied to the gNB-DU of the source cell. The method may include: A gNB-DU of a source cell sends a first message to a terminal device, where the first message includes at least one of the following: an identifier ID of a cell, a TA, a valid command of the TA, and valid time of the TA; and the valid command of the TA indicates that the TA is still valid after the terminal device is switched to the cell, and the TA is used by the terminal device to perform RACH-less access.

In this embodiment of this application, when the TA of the cell is valid, the first message is sent to the terminal device via the gNB-DU of the source cell, and the terminal device may determine, based on one or more of the TA of the cell, the valid command of the TA, and the valid time of the TA in the first message, to use the valid TA to perform RACH-less access, so as to avoid triggering a TA obtaining procedure of the cell again, and reduce signaling overheads of the terminal device and the network side.

It should be understood that the second aspect may be performed by the gNB-DU of the source cell. Specific content of the second aspect corresponds to the content of the first aspect. For a corresponding feature of the second aspect and achieved beneficial effect of the second aspect, refer to the description of the first aspect. To avoid repetition, detailed descriptions are appropriately omitted herein.

In a possible implementation, the method may further include: The gNB-DU of the source cell receives the TA of the cell and a TAT of the TA from a gNB-CU.

In a possible implementation, the TA and the TAT of the TA include at least one of the following: the TA and a TAT 1 of the TA sent by the cell to the gNB-DU of the source cell via the gNB-CU; or the TA sent by the cell to the gNB-DU of the source cell via the gNB-CU, and a TAT 2 configured by the gNB-CU for the TA sent to the gNB-DU of the source cell.

In a possible implementation, the method further includes: The gNB-DU of the source cell receives a TA invalid order command from the terminal device, where the TA invalid order command includes the ID of the cell.

In a possible implementation, the method further includes: The gNB-DU of the source cell sends a PDCCH order to the terminal device, where the PDCCH order is used to obtain a valid TA corresponding to the cell, and the cell indicated by the PDCCH is the same cell as a cell corresponding to the TA invalid command.

In a possible implementation, the method further includes: The gNB-DU of the source cell receives information about a valid TA from the terminal device, where the information about the valid TA includes at least one of the following: an order with the valid TA, a list of cells with valid TAs, TAs corresponding to the list of cells with the valid TAs, and remaining TAT time.

In a possible implementation, the method further includes: The gNB-DU of the source cell sends a cell switch notification to a gNB-DU of the cell, where the cell switch notification includes at least one of the following: the TA, and a recent measurement result of a cell corresponding to the TA.

According to a third aspect, this application provides a TA obtaining method. The method may be applied to a gNB-DU of a cell, or may be applied to an apparatus in the gNB-DU of the cell (for example, a chip, or a chip system, or a circuit) or an apparatus that can be used together with the gNB-DU of the cell. The following description uses an example in which the method is applied to the gNB-DU of the cell. The method may include: If at least one or more of the following are met: timing of a corresponding TA times out when a TAT starts, a change amplitude of an RSRP value of a gNB-DU of the cell is greater than a preset threshold, and a PDCCH order of a cell corresponding to the TA is sent, the gNB-DU of the cell determines that the TA is invalid, where the PDCCH order is used to trigger a terminal device to obtain a TA of the cell, and the TAT is either a TAT 1 configured by the cell or a TAT 2 configured by the gNB-CU.

In this embodiment of this application, the gNB-DU of the cell may maintain validity of the TA, and the gNB-DU of the cell on the network side maintains validity of the TA. This can reduce power consumption of the terminal device, and improve accuracy of RACH-less access. The cell in this embodiment of this application may be understood as a candidate cell, a target cell, or a neighboring cell.

It should be understood that the third aspect may be performed by the gNB-DU of the cell. Specific content of the third aspect corresponds to the content of the first aspect. For a corresponding feature of the third aspect and achieved beneficial effect of the third aspect, refer to the description of the first aspect. To avoid repetition, detailed descriptions are appropriately omitted herein.

In a possible implementation, if the TA is invalid, the method further includes: The gNB-DU of the cell sends a TA invalid order command to the terminal device, where the TA invalid order command includes an ID of the cell or an ID of a TAG.

In a possible implementation, the method further includes: The gNB-DU of the cell receives a cell switch notification from a gNB-DU of a source cell, where the cell switch notification includes at least one of the following: the TA, and a recent measurement result of a cell corresponding to the TA; and the gNB-DU of the cell updates the RSRP value based on the cell switch notification.

In a possible implementation, the method may further include: After obtaining a TA of the terminal device, the gNB-DU of the cell starts, based on the TAT, timing of the corresponding TA.

According to a fourth aspect, this application provides a TA obtaining method. The method may be applied to a gNB-DU of a source cell, or may be applied to an apparatus in the gNB-DU of the source cell (for example, a chip, or a chip system, or a circuit) or an apparatus that can be used together with the gNB-DU of the source cell. The following description uses an example in which the method is applied to the gNB-DU of the source cell. The method may include: A gNB-DU of a source cell sends a first cell switch notification to a gNB-CU, where the first cell switch notification includes: an identifier ID of a cell, an ID of a transport configuration instruction (transport configuration instruction, TCI) status, and related information of the TA, and the related information of the TA includes at least one of a TA of another cell, a TAT corresponding to the TA of the another cell, or remaining duration of the TAT corresponding to the TA of the another cell.

In this embodiment of this application, the gNB-DU of the source cell may send a cell switch notification to the gNB-CU, so that a subsequent gNB-DU of the cell may continue to perform RACH-less access based on the related information of the TA, thereby avoiding re-triggering a TA obtaining procedure of the cell, and reducing signaling overheads on the network side. The network side (gNB-DU of the source cell) maintains validity of the TA. This can reduce power consumption of the terminal device, and improve accuracy of RACH-less access.

In a possible implementation, the method may further include: The gNB-DU of the source cell sends a second cell switch notification to the terminal device, where the second cell switch notification carries the TA of the cell.

In a possible implementation, the method may further include: The gNB-DU of the source cell receives the TA of a gNB-DU of the cell; and if at least one of the following is met: timing of the TAT of the TA or timing of remaining duration of the TAT of the TA times out, a change amplitude of an RSRP value of the cell is greater than a preset threshold, and the terminal device receives a new TA of the gNB-DU of the cell again, the gNB-DU of the source cell determines that the TA is invalid.

In a possible implementation, the TAT corresponding to the TA includes at least one of the following: a TAT 1 sent by the gNB-DU of the cell to the gNB-DU of the source cell; or a TAT 2 configured by the gNB-CU for the TA sent to the gNB-DU of the source cell; or a TAT 3 determined for the TA by the gNB-DU of the source cell.

In a possible implementation, the method may further include: when the gNB-DU of the source cell receives the TA of the gNB-DU of the cell, starting timing of the TAT of the TA or timing of the remaining duration of the TAT of the TA.

In a possible implementation, after the gNB-DU of the source cell sends the second cell switch notification to the terminal device, the method further includes: The gNB-DU of the source cell sends the TA to the gNB-DU of the cell.

According to a fifth aspect, this application provides a TA obtaining method. The method may be applied to a gNB-CU, or may be applied to an apparatus in the gNB-CU (for example, a chip, or a chip system, or a circuit) or an apparatus that can be used together with the gNB-CU. The following description uses an example in which the method is applied to the gNB-CU. The method may include: A gNB-CU sends a TA and related information of the TA to a gNB-DU of a cell, where the related information of the TA includes a TA of another cell, and a TAT corresponding to the TA of the another cell, or the TAT corresponding to the TA of the another cell.

In this embodiment of this application, the gNB-CU may maintain validity of the TA, and the gNB-CU sends the TA and the related information of the TA to the gNB-DU of the cell, so that RACH-less access may be subsequently performed based on the related information of the TA, thereby avoiding re-triggering a TA obtaining procedure of the cell, and reducing signaling overheads on the network side. The network side (gNB-CU) maintains validity of the TA. This can reduce power consumption of the terminal device, and improve accuracy of RACH-less access.

It should be understood that the fifth aspect may be performed by the gNB-CU. Specific content of the fifth aspect corresponds to the content of the fourth aspect. For a corresponding feature of the fifth aspect and achieved beneficial effect of the fifth aspect, refer to the description of the fourth aspect. To avoid repetition, detailed descriptions are appropriately omitted herein.

In a possible implementation, the method may further include: The gNB-CU receives an access success message from the gNB-DU, where the access success message carries an identifier ID of the cell and a TA request, and the TA request is used to request the gNB-CU to deliver an available TA. According to this embodiment of this application, the terminal device requests or forwards the TA after successfully switching to the cell (for example, the TA request is carried in the access success message), so that invalid signaling overheads and maintenance costs of a target side can be avoided.

In a possible implementation, the method further includes: The gNB-CU receives the TA of the gNB-DU of the cell; and if at least one of the following is met: timing of the TAT of the TA or timing of remaining duration of the TAT of the TA times out, a change amplitude of a reference signal receiving power RSRP value of the cell is greater than a preset threshold, and a terminal device receives a new TA of the gNB-DU of the cell again, the gNB-CU determines that the TA is invalid.

In a possible implementation, the TAT corresponding to the TA includes at least one of the following: a TAT 1 sent by the gNB-DU of the cell to the gNB-CU; or a TAT 2 configured by the gNB-CU for the TA sent to the gNB-DU of the cell; or a TAT 3, determined by the gNB-DU of the source cell for the TA, sent to the gNB-CU.

In a possible implementation, the method further includes: The gNB-CU receives a second message from the gNB-DU of the cell, where the second message includes at least one of the following: an ID of the cell, a TA request, and an index of the terminal device, where the TA request is used to request the gNB-CU to deliver an available TA.

In a possible implementation, the method may further include: The gNB-CU receives the TA of the gNB-DU of the cell, and starts timing of the TAT of the TA or timing of remaining duration of the TAT of the TA.

In a possible implementation, the method further includes: The gNB-CU sends the TA and the related information of the TA to the gNB-DU of the cell.

According to a sixth aspect, this application provides a TA obtaining method. The method may be applied to a gNB-DU of a cell, or may be applied to an apparatus in the gNB-DU of the cell (for example, a chip, or a chip system, or a circuit) or an apparatus that can be used together with the gNB-DU of the cell. The following description uses an example in which the method is applied to the gNB-DU of the cell. The method may include: A gNB-DU of a cell determines a TA of a cell and/or related information of the TA, where the related information of the TA includes a TA of another cell, a time alignment timer TAT corresponding to the TA of the another cell, or remaining duration of the TAT corresponding to the TA of the another cell; and the TA is the related information used to trigger random access channel RACH-less access.

In this embodiment of this application, the gNB-DU of the cell may determine the TA of the cell and/or the related information of the TA, and trigger RACH-less access based on the TA of the cell and/or the related information of the TA, so that the TA does not need to be re-obtained, thereby reducing signaling overheads.

It should be understood that the sixth aspect may be performed by a gNB-DU of a target cell. Specific content of the sixth aspect corresponds to the content of the fourth aspect. For a corresponding feature of the sixth aspect and achieved beneficial effect of the sixth aspect, refer to the description of the fourth aspect. To avoid repetition, detailed descriptions are appropriately omitted herein.

In a possible implementation, the method further includes: The gNB-DU of the cell sends a second message to a gNB-CU, where the second message includes at least one of the following: an ID of the cell, a TA request, and an index of a terminal device, where the TA request is used to request the gNB-CU to deliver an available TA

According to a seventh aspect, an embodiment of this application provides a communication apparatus. The communication apparatus may be a terminal device, or may be an apparatus in the terminal device (for example, a chip, or a chip system, or a circuit). For beneficial effect, refer to the description of the first aspect. Details are not described herein again. The communication apparatus has a function of implementing behavior in the method example of the first aspect. The function may be implemented by hardware, or may be implemented by hardware by executing corresponding software. The hardware or the software includes one or more modules corresponding to the functions.

According to an eighth aspect, an embodiment of this application provides a communication apparatus, where the communication apparatus may be a gNB-DU of a source cell, or may be an apparatus in the gNB-DU of the source cell (for example, a chip, or a chip system, or a circuit). For beneficial effect, refer to the descriptions of the second aspect and the fourth aspect. Details are not described herein again. The communication apparatus has a function of implementing behavior in the method examples of the second aspect and the fourth aspect. The function may be implemented by hardware, or may be implemented by hardware by executing corresponding software. The hardware or the software includes one or more modules corresponding to the functions.

According to a ninth aspect, an embodiment of this application provides a communication apparatus, where the communication apparatus may be a gNB-DU of a cell, or may be an apparatus in the gNB-DU of the cell (for example, a chip, or a chip system, or a circuit). For beneficial effect, refer to the descriptions of the third aspect and the sixth aspect. Details are not described herein again. The communication apparatus has a function of implementing behavior in the method examples of the third aspect and the sixth aspect. The function may be implemented by hardware, or may be implemented by hardware by executing corresponding software. The hardware or the software includes one or more modules corresponding to the functions.

According to a tenth aspect, an embodiment of this application provides a communication apparatus, where the communication apparatus may be a gNB-CU, or may be an apparatus in the gNB-CU (for example, a chip, or a chip system, or a circuit). For beneficial effect, refer to the description of the fifth aspect. Details are not described herein again. The communication apparatus has a function of implementing behavior in the method example of the fifth aspect. The function may be implemented by hardware, or may be implemented by hardware by executing corresponding software. The hardware or the software includes one or more modules corresponding to the functions.

According to an eleventh aspect, a communication apparatus is provided. The communication apparatus may be a terminal device, or may be an apparatus in the terminal device (for example, a chip, or a chip system, or a circuit). The apparatus may include a processor, a memory, an input interface, and an output interface. The input interface is configured to receive information from another communication apparatus other than the communication apparatus, and the output interface is configured to output information to another communication apparatus other than the communication apparatus. The processor invokes a computer program stored in the memory to perform the method provided in the first aspect or any implementation of the first aspect.

According to a twelfth aspect, a communication apparatus is provided, where the communication apparatus may be a gNB-DU of a source cell, or may be an apparatus in the gNB-DU of the source cell (for example, a chip, or a chip system, or a circuit). The apparatus may include a processor, a memory, an input interface, and an output interface. The input interface is configured to receive information from another communication apparatus other than the communication apparatus, and the output interface is configured to output information to another communication apparatus other than the communication apparatus. The processor invokes a computer program stored in the memory to perform the method provided in the second aspect or any implementation of the second aspect, the fourth aspect, or any implementation of the fourth aspect.

According to a thirteenth aspect, a communication apparatus is provided, where the communication apparatus may be a gNB-DU of a cell, or may be an apparatus in the gNB-DU of the cell (for example, a chip, or a chip system, or a circuit). The apparatus may include a processor, a memory, an input interface, and an output interface. The input interface is configured to receive information from another communication apparatus other than the communication apparatus, and the output interface is configured to output information to another communication apparatus other than the communication apparatus. The processor invokes a computer program stored in the memory to perform the method provided in the third aspect or any implementation of the third aspect, the sixth aspect, or any implementation of the sixth aspect.

According to a thirteenth aspect, a communication apparatus is provided, where the communication apparatus may be a gNB-CU, or may be an apparatus in the gNB-CU (for example, a chip, or a chip system, or a circuit). The apparatus may include a processor, a memory, an input interface, and an output interface. The input interface is configured to receive information from another communication apparatus other than the communication apparatus, and the output interface is configured to output information to another communication apparatus other than the communication apparatus. The processor invokes a computer program stored in the memory to perform the method provided in the fifth aspect or any implementation of the fifth aspect.

According to a fourteenth aspect, this application provides a communication system, where the communication system includes at least one terminal device, a gNB-DU of at least one source cell, a gNB-DU of at least one cell, and at least one gNB-CU. When the at least one terminal device, the gNB-DU of the at least one source cell, the gNB-DU of the at least one cell, and the at least one gNB-CU are run in the communication system, the terminal device is configured to perform any method according to the first aspect to the sixth aspect.

According to a fifteenth aspect, this application provides a computer-readable storage medium, where the computer-readable storage medium stores computer instructions. When a computer program or the computer instructions are run, the method in the first aspect and any possible implementation of the first aspect, the second aspect and any possible implementation of the second aspect, the third aspect and any possible implementation of the third aspect, the fourth aspect and any possible implementation of the fourth aspect, the fifth aspect and any possible implementation of the fifth aspect, or the sixth aspect and any possible implementation of the sixth aspect is implemented.

According to a sixteenth aspect, this application provides a computer program product including executable instructions. When the computer program product runs on a communication device, the method in the first aspect and any possible implementation of the first aspect, the second aspect and any possible implementation of the second aspect, the third aspect and any possible implementation of the third aspect, the fourth aspect and any possible implementation of the fourth aspect, the fifth aspect and any possible implementation of the fifth aspect, or the sixth aspect and any possible implementation of the sixth aspect is implemented.

According to a seventeenth aspect, this application provides a communication apparatus. The communication apparatus includes a processor, and may further include a memory, configured to implement the method in the first aspect and any possible implementation of the first aspect, the second aspect and any possible implementation of the second aspect, the third aspect and any possible implementation of the third aspect, the fourth aspect and any possible implementation of the fourth aspect, the fifth aspect and any possible implementation of the fifth aspect, or the sixth aspect and any possible implementation of the sixth aspect. The communication apparatus may be a chip system. The chip system may include a chip, or may include a chip and another discrete component.

### BRIEF DESCRIPTION OF THE DRAWINGS

To describe technical solutions in embodiments of this application more clearly, the following briefly describes accompanying drawings that need to be used in descriptions of embodiments.
FIG. 1 is a diagram of a network architecture according to an embodiment of this application;
FIG. 2 is a diagram of a network architecture of an access network device according to an embodiment of this application;
FIG. 3 is a diagram of protocol layer division according to an embodiment of this application;
FIG. 4 is an interaction flowchart of cell switch according to an embodiment of this application;
FIG. 5A and FIG. 5B are an interaction flowchart of cell switch according to an embodiment of this application;
FIG. 6 is a diagram of an LTM cell change command MAC CE according to an embodiment of this application;
FIG. 7 is an interaction diagram of a communication method according to an embodiment of this application;
FIG. 8 is an interaction diagram of another communication method according to an embodiment of this application;
FIG. 9 is an interaction diagram of still another communication method according to an embodiment of this application;
FIG. 10 is an interaction diagram of still another communication method according to an embodiment of this application;
FIG. 11 is an interaction diagram of still another communication method according to an embodiment of this application;
FIG. 12 is a diagram of a structure of a communication apparatus according to an embodiment of this application;
FIG. 13 is a diagram of a structure of another communication apparatus according to an embodiment of this application; and
FIG. 14 is a diagram of a structure of a terminal device according to an embodiment of this application.

### DESCRIPTION OF EMBODIMENTS

In the descriptions of this application, "/" means "or" unless otherwise specified. For example, A/B may represent A or B. A term "and/or" in this application describes only an association relationship between associated objects and indicates that there may be three relationships. For example, A and/or B may represent the following three cases: Only A exists, both A and B exist, and only B exists. In addition, "at least one" may mean one or more, and "a plurality of" may mean two or more. "At least one of..." means the listed items and any combination thereof. For example, "at least one of A, B and C" or "at least one of A, B or C" can mean six cases: A exists alone, B exists alone, C exists alone, A and B exist simultaneously, B and C exist simultaneously, A and C exist simultaneously, and A, B and C exist simultaneously. Words such as "first" and "second" do not limit a quantity or an execution order, and the words such as "first" and "second" do not necessarily indicate a difference either.

It should be noted that in this application, words such as "example" or "for example" are used to represent giving an example, an illustration, or a description. Any embodiment or design scheme described as an "example" or "for example" in this application should not be understood as being more preferred or having more advantages than another embodiment or design scheme. In particular, the terms such as "exemplary" and "example" as used herein are intended to present the related concept in a specific implementation.

In descriptions of this application, the "order" may include a direct order and an indirect order, or may include an explicit order and an implicit order. Information indicated by a piece of information (the order information described below) is referred to as to-be-indicated information. In a specific implementation process, there are many manners of indicating the to-be-indicated information. For example, the to-be-indicated information may be directly indicated, for example, the to-be-indicated information or an index of the to-be-indicated information may be indicated. For another example, the to-be-indicated information may be indirectly indicated by indicating other information, and an association relationship exists between the indicated other information and the to-be-indicated information. For another example, only a part of the to-be-indicated information may be indicated, and the other part of the to-be-indicated information are known or pre-agreed on. In addition, specific information may alternatively be indicated according to an arrangement sequence of a plurality of pieces of information that is pre-agreed on (for example, stipulated in a protocol), to reduce indication overheads to some extent.

The following first describes an example of a network architecture applicable to this embodiment of this application.

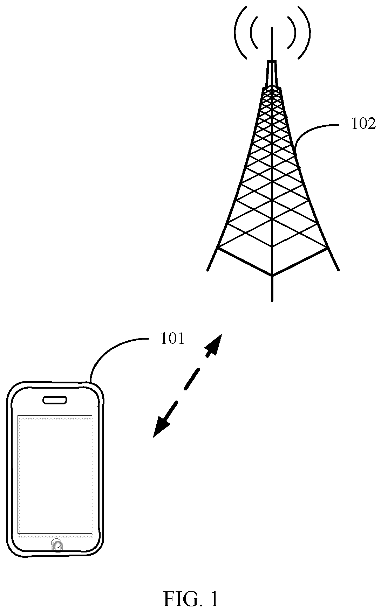

Refer to FIG. 1. FIG. 1 is a diagram of a network architecture according to an embodiment of this application. As shown in FIG. 1, the network architecture may include a terminal device 101 and an access network device 102. The terminal device 101 may be connected to the access network device 102 in a wireless manner. It should be noted that quantities and types of access network devices and terminal devices included in the network architecture shown in FIG. 1 are merely examples, and this embodiment of this application is not limited thereto. For example, the terminal device may further include more or fewer terminal devices that communicate with the access network device. For brief description, the terminal devices are not described one by one in the accompanying drawings. In addition, in the network architecture shown in FIG. 1, although the access network device and the terminal device are shown, the application scenario may not be limited to including the access network device and the terminal device, for example, may further include a core network device configured to bear a virtualized network function. These are obvious to a person skilled in the art, and are not described herein again.

The technical solutions in embodiments of this application may be applied to various communication systems, for example: a cellular system (for example, a 5G communication system, a communication system in which a plurality of wireless technologies are converged (for example, a communication system in which at least two of 2G, 3G, 4G, or 5G technologies are converged) related to the 3rd generation partnership project (3rd generation partnership project, 3GPP) or a future-oriented evolved system (for example, a 6G access technology)), or a wireless fidelity (wireless fidelity, Wi-Fi) system, or a communication system in which a cellular system related to the 3GPP is converged with another technology, or a future communication system, or the like.

An access network device in this application is sometimes referred to as an access node. The access network device has a wireless transceiver function, and is configured to communicate with the terminal. The access network device includes but is not limited to a base station (base station) in the foregoing communication system, an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, an access network device or a module of an access network device in an open access network ORAN (open RAN, ORAN) system, a base station in a future mobile communication system, an access node in a Wi-Fi system, or the like. The access network device may also be a module or a unit that can implement some functions of the base station. For example, the access network device may be a central unit (central unit, CU), a distributed unit (distributed unit, DU), a CU-control plane (control plane, CP), a CU-user plane (user plane, UP), a radio unit (radio unit, RU), or the like described below. In the ORAN system, the CU may also be referred to as an O-CU, the DU may also be referred to as an open (open, O)-DU, the CU-CP may also be referred to as an O-CU-CP, the CU-UP may also be referred to as an O-CUP-UP, and the RU may also be referred to as an O-RU. The access network device may be a macro base station, a micro base station, an indoor base station, a relay node or a donor node, or a radio controller in a cloud radio access network (cloud radio access network, CRAN) scenario. Optionally, the access network device may be a server, a wearable device, an on-board device, or the like. For example, an access network device in a vehicle to everything (vehicle to everything, V2X) technology may be a road side unit (road side unit, RSU). A plurality of access network devices in the communication system may be base stations of a same type, or may be base stations of different types. The base station may communicate with the terminal, or may communicate with the terminal by using a relay station. The terminal may communicate with a plurality of base stations in different access technologies.

The terminal may also be referred to as a terminal device, a user equipment (user equipment, UE), a mobile station, a mobile terminal, or the like. The terminal may be widely used in various communication scenarios, for example, a device-to-device (device-to-device, D2D) scenario, a vehicle to everything (vehicle to everything, V2X) communication scenario, a machine-type communication (machine-type communication, MTC) scenario, an internet of things (internet of things, IOT) scenario, a virtual reality scenario, an augmented reality scenario, an industrial control scenario, a self-driving scenario, a remote medical scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an unmanned aerial vehicle, a helicopter, an airplane, a ship, a robot, a robot arm, a smart home device, or the like. A device form of the terminal is not limited in this disclosure.

The access network device and/or the terminal may be fixed, or may be movable. The access network device and/or the terminal may be deployed on land, including indoor, outdoor, handheld, or vehicle-mounted deployment, may be deployed on a water surface, or may be deployed on an airplane, a balloon, or an artificial satellite in the air. Application scenarios of the access network device and the terminal are not limited in this disclosure. The access network device and the terminal device may be deployed in a same scenario or different scenarios. For example, the access network device and the terminal device are deployed on land at the same time. Alternatively, the access network device is deployed on land, the terminal device is deployed on a water surface, or the like. Examples are not provided one by one.

In this application, each element in the communication system may be considered as a network element in the communication system. Both the access network device and the terminal device may be collectively referred to as communication apparatuses. 102 in FIG. 1 may be referred to as a communication apparatus having a function of the access network device, and 101 in FIG. 1 may be referred to as a communication apparatus having a function of the terminal device.

In this application, the communication apparatus having the function of the access network device may be an access network device or a module in the access network device (like a chip, a chip system, or a software module) or a control subsystem that includes the function of the access network device. For example, the control subsystem including the access network device function may be a control center in a scenario to which the terminal is applicable, such as a smart grid, industrial control, intelligent transportation, or a smart city.

In this application, the communication apparatus that has the terminal function can be a terminal or a module in the terminal (for example, a chip, a chip system, a modem, or a software model) or an apparatus that includes the terminal function.

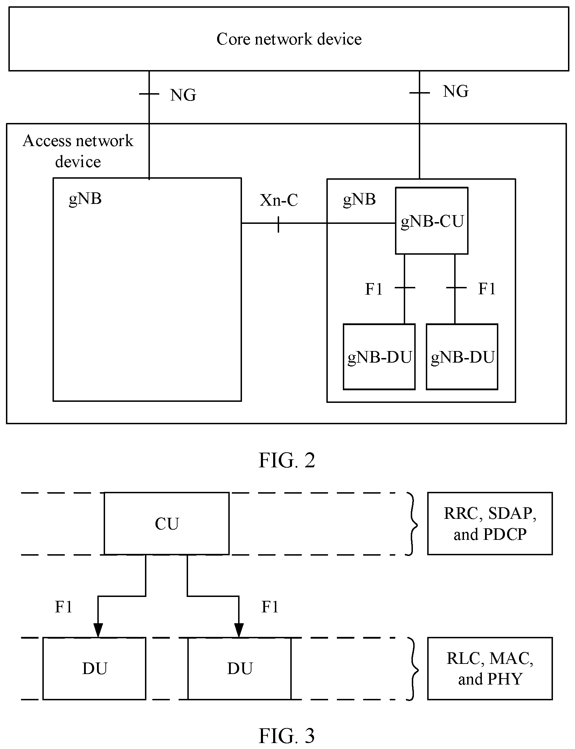

Further, refer to FIG. 2. FIG. 2 is a diagram of a network architecture of an access network device according to an embodiment of this application. As shown in FIG. 2, the access network device may include a CU and a DU. The design may be referred to as separation of the CU and the DU. A plurality of DUs may be centrally controlled by one CU. For example, an interface between the CU and the DU is referred to as an F1 interface. A control plane (control panel, CP) interface may be an F1-C, and a user plane (UP) interface may be an F1-U. Specific names of interfaces are not limited in this disclosure.

Communication between the access network device and the terminal device may comply with a specific protocol layer structure. In an example, the protocol layer structure may include a control plane protocol layer structure and a user plane protocol layer structure. For example, the control plane protocol layer structure may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. For example, the user plane protocol layer structure may include at least one of the following: a service data adaptation protocol (service data adaptation protocol, SDAP) layer, a PDCP layer, an RLC layer, a MAC layer, a physical layer, or the like.

The CU and the DU may be divided based on a protocol layer of a wireless network. For example, refer to FIG. 3. FIG. 3 is a diagram of protocol layer division according to an embodiment of this application. As shown in FIG. 3, functions of a PDCP layer and a protocol layer (for example, an RRC layer and an SDAP layer) above the PDCP layer are set on the CU, and functions of a protocol layer (for example, an RLC layer, a MAC layer, and a PHY layer) below the PDCP layer are set on the DU. For another example, the functions of the protocol layer above the PDCP layer are set on the CU, and the functions of the PDCP layer and the protocol layer below the PDCP layer are set on the DU. This is not limited.

The division into the processing functions of the CU and the DU based on the protocol layers is merely an example, and the division may alternatively be performed in another manner. For example, the CU or the DU may be divided to have functions having more protocol layers. For another example, the CU or the DU may be divided to have some processing functions having protocol layers. For example, some functions of the RLC layers and functions of protocol layers above the RLC layers are set in the CU, and remaining functions of the RLC layers and functions of protocol layers below the RLC layers are set in the DU. For another example, functions of the CU or the DU may be divided based on a service type or another system requirement. For example, division is performed based on a delay. A function whose processing time needs to satisfy a delay requirement is set in the DU, and a function whose processing time does not need to satisfy the delay requirement is set in the CU.

Optionally, the CU may have one or more functions of the core network.

Optionally, functions of the CU may be further divided, and the control plane and the user plane are separated and implemented by using different entities. The separated entities are respectively a control plane CU entity (namely, a CU-CP entity) and a user plane CU entity (namely, a CU-UP entity). The CU-CP entity and the CU-UP entity may respectively be connected to the DU. In this application, an entity may be understood as a module or a unit, and an existence form of the entity may be a hardware structure, a software module, or a hardware structure and a software module. This is not limited.

In the embodiments of this application, the terminal device or the network device includes a hardware layer, an operating system layer that runs at the hardware layer, and an application layer that runs at the operating system layer. The hardware layer includes hardware such as a central processing unit (central processing unit, CPU), a memory management unit (memory management unit, MMU), and a memory (also referred to as a main memory). The operating system may be any one or more types of computer operating systems, for example, a Linux operating system, a Unix operating system, an Android operating system, an iOS operating system, or a Windows operating system, that implement service processing by using a process (process). The application layer includes applications such as a browser, an address book, word processing software, and instant messaging software. In addition, a specific structure of an execution body of a method provided in embodiments of this application is not particularly limited in embodiments of this application, provided that communication can be performed according to the method provided in embodiments of this application by running a program of code recording the method provided in embodiments of this application. For example, the execution body of the method provided in embodiments of this application may be a terminal device or a network device, or a functional module that is in a terminal device or a network device and that can invoke a program and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include, but is not limited to: a magnetic storage device (such as a hard disk, a floppy disk, or a magnetic tape), an optical disc (such as a compact disc (compact disc, CD), or a digital versatile disc (digital versatile disc, DVD)), a smartcard and a flash memory device (such as an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but are not limited to a radio channel and various other media that can store, include, and/or carry instructions and/or data.

The following first provides definitions of technical terms that may appear in embodiments of this application. Terms used in implementations of this application are merely intended to explain specific embodiments of this application, instead of limiting this application.

### (1) Protocol stack

A protocol stack of a control plane between a terminal device, an access network device, and a core network device may include a non-access stratum (a non-access stratum, NAS) layer, an RRC layer, a PDCP layer, an RLC layer, a MAC layer, and a PHY layer).

NAS layer: The non-access stratum is located between UE and an AMF of a core network, and is mainly responsible for registration management, session management, authentication control, and the like. The UE interacts with the core network through NAS messages.

RRC layer: The RRC layer is layer 3 and a radio resource control layer, and is mainly responsible for a control plane process related to a radio access network.

PDCP layer: The PDCP layer is layer 2 and is a packet data convergence layer, and provides transmission services for a radio bearer (radio bearer, RB) and provides functions such as adding sequence numbers, compression, encryption, decryption, integrity protection, and check.

RLC layer: The RLC layer is layer 2 and a radio link control layer. The RLC layer communicates with the PDCP layer through an RLC channel, and communicates with the MAC layer through a logical channel. Main functions of the RLC layer include segmenting and reassembly of an RLC service data unit (service data unit, SDU), automatic repeat request (automatic repeat request, ARQ) error correction, duplicate detection, and the like.

MAC layer: The MAC layer is layer 2 and a media access control layer, and is mainly responsible for processing mapping between a logical channel and a transmission channel and scheduling of radio resources. Main functions include mapping between the logical channel and the transmission channel, multiplexing, demultiplexing, and scheduling of the logical channel.

PHY layer: The PHY layer is layer 1 and a physical layer, is located at a bottom layer of an air interface protocol stack, and is mainly responsible for encoding, modulation, multi-antenna processing, time-frequency resource mapping, and the like.

### (2) L1/L2 Triggered Mobility (L1/L2 triggered mobility, LTM)

L1 may refer to a physical layer, and L2 may refer to a MAC/RLC/PDCP/SDAP layer. LTM means that a switch-related operation is mainly performed at L1 and/or L2. For example, the terminal device sends an L1 measurement result to the access network device via physical layer control signaling (carried on a physical uplink control channel (physical uplink control channel, PUCCH), and a physical layer of the access network device reads the L1 measurement result, and based on the measurement result, a switch decision made by the access network device is sent to the terminal device via L1/L2 signaling. The L1/L2 signaling may be a message carried on a physical downlink control channel (physical downlink control channel, PDCCH), or may be a MAC control element (MAC control element, MAC CE).

It should be noted that L1/L2 may be understood as L1 and/or L2. When the relationship is "and", operations related to the switch process may be mainly completed by L1 and L2. If the relationship is "or", switch-related operations are performed by L1 or L2.

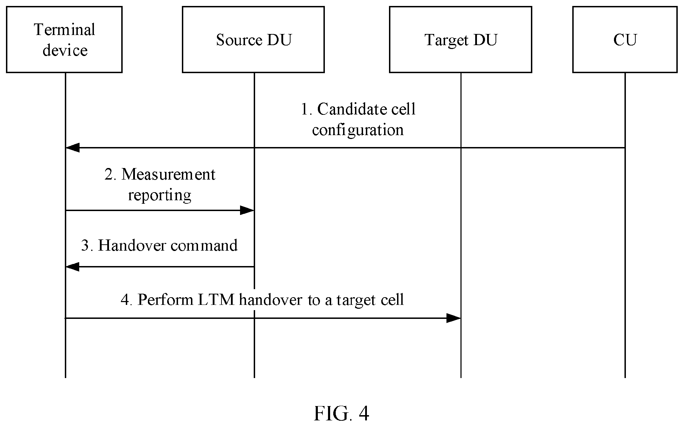

LTM switch can be performed in different scenarios, such as intra-DU, inter-DU, and inter-CU. Although specific signaling exchange content is different, the basic principles are the same. The following uses cell switch between different DUs under a same CU as an example for description. When a cross-CU scenario is involved, inter-CU interaction signaling or steps are added, for example, a switch request message sent by a source CU to a candidate target CU, or a switch request response message sent by the target CU to the source CU. Refer to FIG. 4. FIG. 4 is an interaction flowchart of cell switch according to an embodiment of this application. As shown in FIG. 4, the main process may be as follows:
1. A CU sends a configuration of a candidate cell to a terminal device. The CU may send configuration information of the candidate cell to the terminal device via a source DU. For each candidate cell, preconfiguration information includes an identifier, a configuration (for example, an AS access configuration), and the like of the candidate cell. After receiving the preconfiguration information, UE does not disconnect from a source cell.
2. The terminal device reports measurement to the source DU. The terminal device sends a measurement result to the source DU, where the measurement result may include at least one of the following: an L1 measurement result of the source cell and an L1 measurement result of at least one candidate cell. The L1 measurement result of the source cell and/or the L1 measurement result of the candidate cell may be a cell-level measurement result, or may be a beam-level measurement result.
3. The source DU sends a switch command to the terminal device. The source DU sends the switch command to the terminal device, and sends identification information of an associated target cell to the terminal device via L1/L2 signaling, where the L1/L2 signaling is sent via a communication resource of the source cell. The target cell is one or more candidate cells.
4. The terminal device performs LTM switch to a target DU to hand over to a target cell. The terminal device may access the target cell based on the configuration information that corresponds to the target cell and that is received in step 1, and start to perform uplink and downlink data transmission with the target cell after successful access. The terminal device may access the target cell in a random access manner, or may access the target cell in a random access-free manner. In a random access-free switch process, the terminal device sends an uplink message to the target cell by using uplink grant (UL grant) of the target cell. After receiving the message, the target cell may consider that the terminal device is successfully switched to the target cell. A prerequisite for the terminal device to perform random access-free switch is that the terminal device obtains uplink synchronization information of the target cell, for example, a TA.

It should be noted that before the cell switch occurs, the target DU may also be referred to as a candidate DU, and when the switch occurs, the candidate DU that manages the target cell may also be referred to as a target DU. That the terminal device communicates with a cell may be understood as that the terminal device communicates with an access network device to which the cell belongs, or the terminal device performs communication via a communication resource of the cell. For example, that the terminal device sends a message to the source cell may be understood as that the terminal device sends a message to the source DU, or the terminal device sends a message to a source access network device, or the terminal device sends a message via a communication resource of the source cell.

In addition, the target cell is one of candidate cells. When the terminal device receives the switch command to perform cell switch, a candidate cell may be referred to as a target cell. Similarly, the target DU is one of candidate DUs. When the terminal device receives the switch command to perform cell switch, a candidate DU may be referred to as a target DU.

(3) A gNB-CU controls logical units of one or more DUs and manages the RRC, SDAP, PDCP (gNB) or RRC, or PDCP layer (en-gNB).

(4) A gNB-DU runs a part of logical units controlled by the gNB-CU and manages RLC, MAC, and PHY layers of an en-gNB or a gNB. One gNB-DU can support one or more cells.

It should be understood that definitions of the foregoing technical terms are merely examples. For example, with continuous development of technologies, the scope of the foregoing definitions may also change. This is not limited in embodiments of this application.

First, to facilitate understanding of embodiments of this application, a technical problem to be specifically solved by this application is further analyzed and proposed. Currently, for a cell switch scenario, to reduce a switch delay and interruption time, and improve user experience of a terminal device, L1/L2 triggered mobility is proposed. The L1/L2 triggered mobility may also be referred to as L1/L2 switch. The L1/L2 switch may indicate, via L1 signaling (for example, DCI) and/or L2 signaling (for example, MAC CE), the terminal device to perform switch. Implementation of the LTM includes a plurality of technical solutions. The following exemplifies an RACH-less access solution.

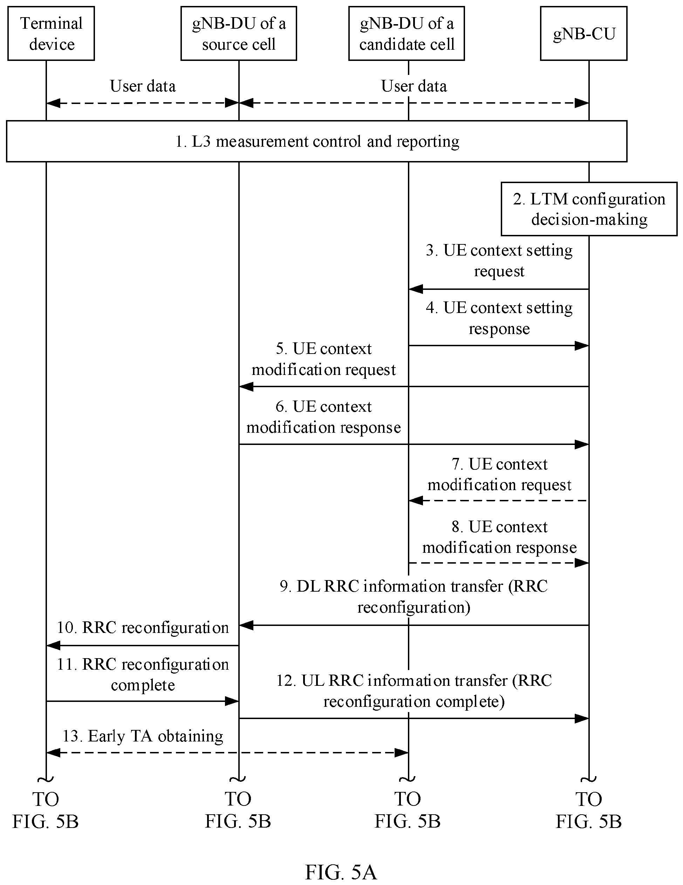

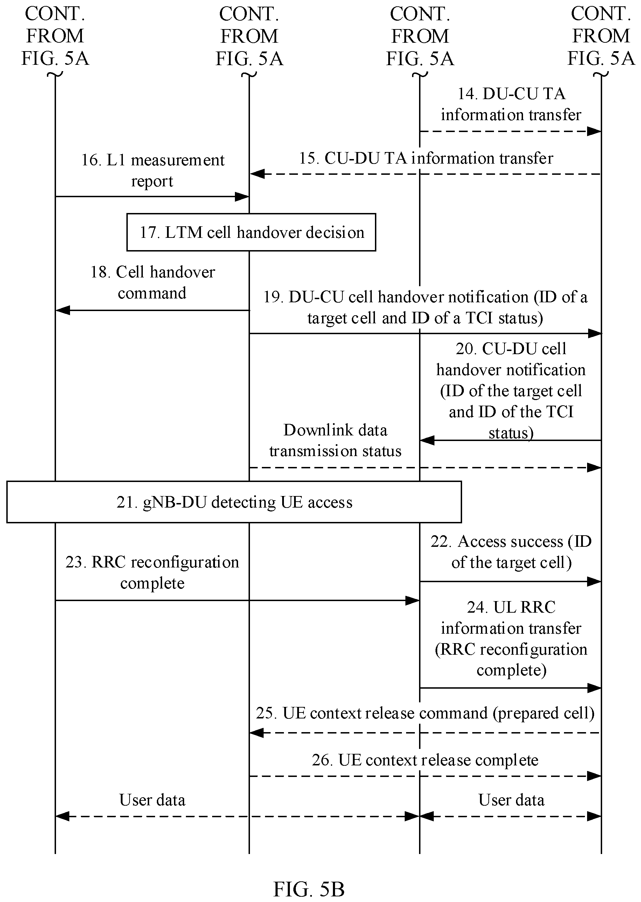

Refer to FIG. 5A and FIG. 5B. FIG. 5A and FIG. 5B are an interaction flowchart of cell switch according to an embodiment of this application. As shown in FIG. 5A and FIG. 5B, the following steps may be included.

User data can be exchanged between a terminal device and a gNB-DU and a gNB-CU of a source cell.
1. L3 measurement control and reporting are performed between the terminal device, the gNB-DU of the source cell, and a gNB-DU and a gNB-CU of a candidate cell.
2. The gNB-CU makes an LTM configuration decision.
3. The gNB-CU sends a UE context setup request to the gNB-DU of the candidate cell.
4. The gNB-DU of the candidate cell sends a UE context setup response to the gNB-CU.
5. The gNB-CU sends a UE context modification request to the gNB-DU of the source cell.
6. The gNB-DU of the source cell sends a UE context modification response to the gNB-CU.

Optionally, 7. The gNB-CU sends a UE context modification request to the gNB-DU of the candidate cell.

Optionally, 8. The gNB-DU of the candidate cell sends a UE context modification response to the gNB-CU.

9. The gNB-CU sends DL RRC information transfer (RRC reconfiguration) to the gNB-DU of the source cell.

10. The gNB-DU of the source cell initiates RRC reconfiguration to the terminal device.

11. The terminal device sends an RRC reconfiguration complete message to the gNB-DU of the source cell.

12. The gNB-DU of the source cell sends UL RRC message transfer (RRC reconfiguration complete) to the gNB-CU.

13. The terminal device completes early TA obtaining with the candidate cell.

14. The gNB-DU of the candidate cell sends DU-CU TA information transfer to the gNB-CU.

15. The gNB-CU sends CU-DU TA information transfer to the gNB-DU of the source cell.

16. The terminal device sends an L1 measurement report to the gNB-DU of the source cell.

17. The gNB-DU of the source cell makes an LTM cell switch decision.

18. The gNB-DU of the source cell sends a cell switch command to the terminal device.

19. The gNB-DU of the source cell sends a DU-CU cell switch notification (an ID of the target cell and an ID of a TCI status) to the gNB-CU.

20. The gNB-CU sends a CU-DU cell switch notification (the ID of the target cell and the ID of the TCI status) to the gNB-DU of the candidate cell.

21. The gNB-DU detects access of the UE. Specifically, the gNB-DU of the source cell and the gNB-DU of the candidate cell complete access with the terminal device.

22. The gNB-DU of the candidate cell sends an access success message (the ID of the target cell) to the gNB-CU.

23. The terminal device sends an RRC reconfiguration complete message to the gNB-DU of the candidate cell.

24. The gNB-DU of the candidate cell sends UL RRC message transfer (RRC reconfiguration complete) to the gNB-CU.

25. The gNB-CU sends a UE context release command (prepared cell) to the gNB-DU of the source cell.

26. The gNB-DU of the source cell sends a UE context release complete message to the gNB-CU.

The user data can be exchanged between the terminal device and the gNB-DU and the gNB-CU of the candidate cell.

L1/L2 triggered mobility (L1/L2 triggered mobility, LTM) refers to a scenario where a network side preconfigures a plurality of candidate cells for a terminal device, and based on an L1 measurement result reported by the terminal device, the network side can continuously trigger the mobility management mechanism by using the switch command carried in the MAC CE, so that the terminal device is switched from a source cell to the candidate cell. Before the switch command is sent, the terminal device may be triggered to perform downlink and uplink synchronization.

In uplink synchronization in R18, the gNB-DU of the source cell triggers, by using a PDCCH order, the terminal device to send a preamble (preamble) to the gNB-DU of the candidate cell. After the gNB-DU of the candidate cell measures a TA of the terminal device, the gNB-DU of the candidate cell sends the TA to the gNB-DU of the source cell via the gNB-CU, and provides a preamble related to the TA and an identification (identification, ID) of the candidate cell. The gNB-DU of the source cell receives the TA and contention free random access (contention free random access, CFRA) resource information (for example, a preamble value) related to the TA, the ID of the candidate cell, and an ID of a DU of the candidate cell (this item is omitted if there is a same DU). Based on the above information sources, the terminal device corresponding to the TA can be determined. The TA is then sent to the corresponding terminal device via a cell change command. For example, the gNB-DU of the source cell sends the LTM command carried in the MAC CE (as shown in FIG. 5A and FIG. 5B) together with the related TA of the target cell to the terminal device for RACH-less access.

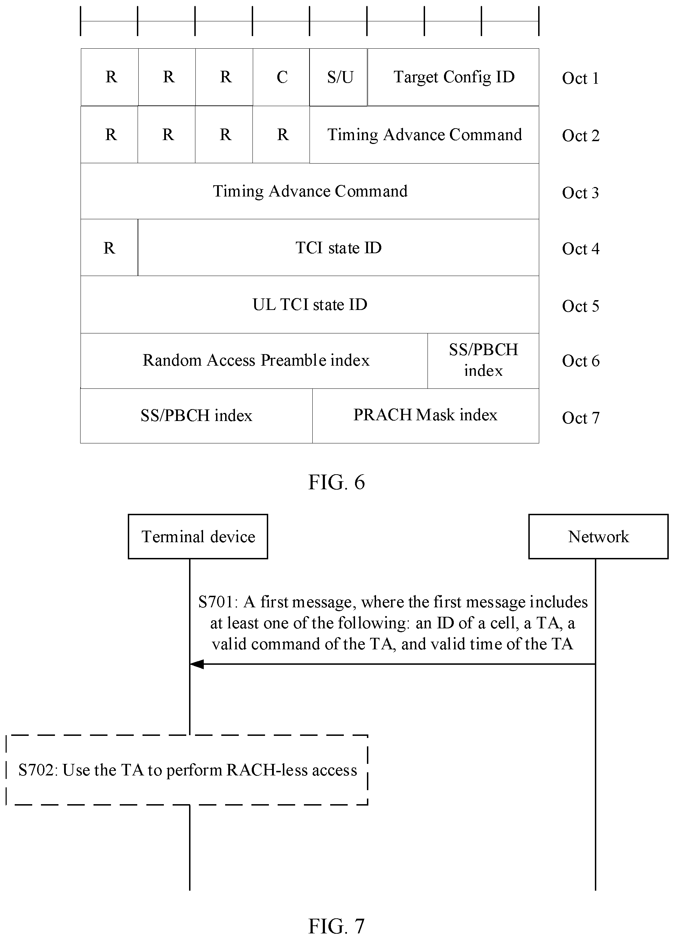

Refer to FIG. 6. FIG. 6 is a diagram of an LTM cell change command MAC CE according to an embodiment of this application. As shown in FIG. 6, in a switch command, if a timing advance command (timing advance command, TAC) indicates whether a TA of an LTM target cell (that is, SpCell corresponding to a target configuration indicated by a target configuration ID field target configuration index field) is valid. Specifically, if the field is set to FFF, it indicates that no valid timing adjustment is available for the LTM target cell; otherwise, the field indicates an index value TA (index value TA) used to control a quantity for timing adjustment, where the timing adjustment needs to be applied by a MAC entity.

However, in consecutive LTM, the gNB-DU of the candidate cell needs to re-trigger a TA obtaining procedure each time cell switch is performed on the terminal device. The TA obtaining procedure is frequently re-triggered a plurality of times, causing high signaling overheads of the terminal device and the network side. The specific problems to be solved are as follows:
1. How to help determine validity of a TA based on a real-time status of a terminal device.
2. Available solutions for TA validity maintenance on the network side and nodes for triggering, maintaining, and participation.
3. To reduce signaling overheads of the terminal device and the network side, specific interaction time and interaction content need to be considered when a TA is obtained through interaction of the network side.
4. TA processing in LTM fast recovery scenarios.

Based on the foregoing, this application proposes a communication method, and the following separately describes the communication method by using the following embodiments. Some of these communication methods are only for some procedures in the TA obtaining method, and some of these communication methods may be applied to any one or more procedures in the TA obtaining method. It should be understood that these communication methods may be used in combination with each other. For example, a process in the TA obtaining method may use one method and another process may use another method, or a process in the TA obtaining method may use both one method and another method.

It should be understood that the TA obtaining method may change with evolution of the technical solution. The technical solution provided by this application is not limited to an LTM switch scenario, but is also applicable to another switch technology or another scenario in which uplink synchronization needs to be obtained. The technical solution provided by this application is not limited to the process described below. Further, the description of the scenario in embodiments of this application is merely an example, and it is not limited that the solution in embodiments of this application can be used only to describe the scenario, and is also applicable to a scenario in which a similar problem exists.

The terminal device in embodiments of this application (as shown in embodiments corresponding to FIG. 7 to FIG. 11 below) can be the terminal device in the network architecture shown in FIG. 1. The functions performed by the terminal device in this embodiment can also be performed by an apparatus in the terminal device (for example, a chip, a chip system, or a circuit). The network side device in this embodiment may be an access network device in the network architecture shown in FIG. 1, and a function performed by the access network device in this embodiment may also be performed by an apparatus in the access network device (for example, a chip, or a chip system, or a circuit). This is uniformly described in this embodiment of this application. Details are not described later.

With reference to the foregoing network architecture, the following describes a communication method provided in an embodiment of this application. Refer to FIG. 7. FIG. 7 is an interaction diagram of a communication method according to an embodiment of this application. As shown in FIG. 7, the method may include the following steps. S702 is an optional step.

S701: A network side sends a first message to a terminal device, where the first message includes at least one of the following: an ID of a cell, a TA, a valid command of the TA, and valid time of the TA. Correspondingly, the terminal device receives the first message from the network side.

The network side may preconfigure a plurality of cells for the terminal device. Based on an L1 measurement result reported by the terminal device, the network side may trigger a mobility management mechanism by using a cell switch command, so that the terminal device implements switch from a source cell to a candidate cell. Before the cell switch command is sent, the network side may first trigger the terminal device to perform uplink and downlink synchronization. For example, in uplink synchronization, the network side may trigger uplink synchronization by using a PDCCH order. Specifically, the network side may send a PDCCH order to the terminal device, carrying the ID of the cell. The terminal device sends a preamble to the network side, so that the network side can measure the TA of the cell.

If the TA of the cell is still valid, the network side may send the first message to the terminal device, where the first message may include one or more of the ID of the cell, the TA, the valid command of the TA, and the valid time of the TA.

The cell in this embodiment of this application may be understood as a candidate cell, a target cell, a neighboring cell, or the like. The following may use a candidate cell as an example for description. The ID of the cell may be a physical cell index PCI, a candidate configuration index (candidate configuration ID), or another index that can uniquely identify the cell.

The TA is in a one-to-one correspondence with the terminal device and a cell in which the terminal device sends the preamble, that is, the TA of the terminal device and the cell are uniquely determined. The valid command of the TA indicates that the TA is still valid after the terminal device is switched to the candidate cell. The valid time of the TA may be dedicated time of the TA. For example, after receiving the valid time of the TA, the terminal device may: enable, based on the valid time of the TA, a TAT corresponding to the TA; when the TAT times out, determine that the TA is valid (which may also be understood as valid); and when the TAT times out, determine that the TA is invalid. The TAT may be configured by the network side for the terminal device together with the TA, or may be preconfigured, for example, predefined in a protocol. It may be understood that, that the network side determines that the TA of the cell is still valid may be determining, based on a location of the terminal device and a location of the gNB-DU of the cell, whether the TA of the cell is still valid. If the location of the terminal device does not change, a distance to the location of the gNB-DU of the candidate cell does not change, and it may be determined that the TA of the cell is still valid. If the location of the terminal device changes, the distance to the location of the gNB-DU of the cell changes, and it may be determined that the TA of the cell is invalid. The TA obtaining procedure of the cell needs to be re-triggered.

It may be understood that, if the network does not provide the TA of the cell for the terminal device until cell switch is triggered, it is unreasonable to reuse an existing TAT because the TA is actually obtained some time earlier. Therefore, the original TAT cannot be reused, and dedicated time of the TA needs to be provided.

In a possible implementation, if the terminal device performs RACH-less access for the first time, the first message may carry the ID of the cell. If the terminal device does not perform RACH-less for the first time (the terminal device has obtained the TA of the cell in a previous RACH-less access procedure), when the network sends the first message to the terminal device, the TA of the cell is still valid. In this case, the TA of the cell may not be carried in the first message, and only the valid command of the TA is indicated in the first message. In this way, when the TA is valid, a 12-bit TAC does not need to be repeatedly transmitted. One or more bits indicate that the TA is still valid. The TA may be used for subsequent RACH-less access, an LTM procedure, or LTM recovery (recovery), to reduce signaling overheads of the terminal device and the network side.

The first message may be a cell switch command (cell switch command) or a random access response (random access response, RAR) message or another message. If the first message is a cell switch command, the network side device may be a gNB-DU of the source cell. If the first message is an RAR message or another message, the network side device may be a gNB-DU of the source cell or the candidate cell.

The first message may be carried in DCI, RRC, a MAC CE, or another message/signaling.

S702: The terminal device performs RACH-less access by using the TA.

After receiving the first message from the network side, the terminal device may determine, based on one or more of the ID of the cell, the TA, the valid command of the TA, and the valid time of the TA in the first message, to use the TA to perform RACH-less access. For example, if the first message includes the TA of the cell and the valid command of the TA, after being switched to the target cell, the terminal device may reserve the TA, and use the TA to perform RACH-less access. For another example, if the first message includes the TA of the cell and the valid time of the TA, the terminal device may use the TA to perform RACH-less access within the valid time of the TA.

Different from the conventional technology, during continuous RACH-less access, the terminal device needs to re-trigger a TA obtaining procedure of the cell each time the terminal device is switched to a new cell. In this embodiment of this application, when the TA of the cell is valid, the network side sends the first message to the terminal device, and the terminal device may determine, based on one or more of the ID of the cell, the TA, the valid command of the TA, and the valid time of the TA in the first message, to continue to use the valid TA to perform RACH-less access, so as to avoid triggering the TA obtaining procedure of the cell again, and reduce signaling overheads of the terminal device and the network side.

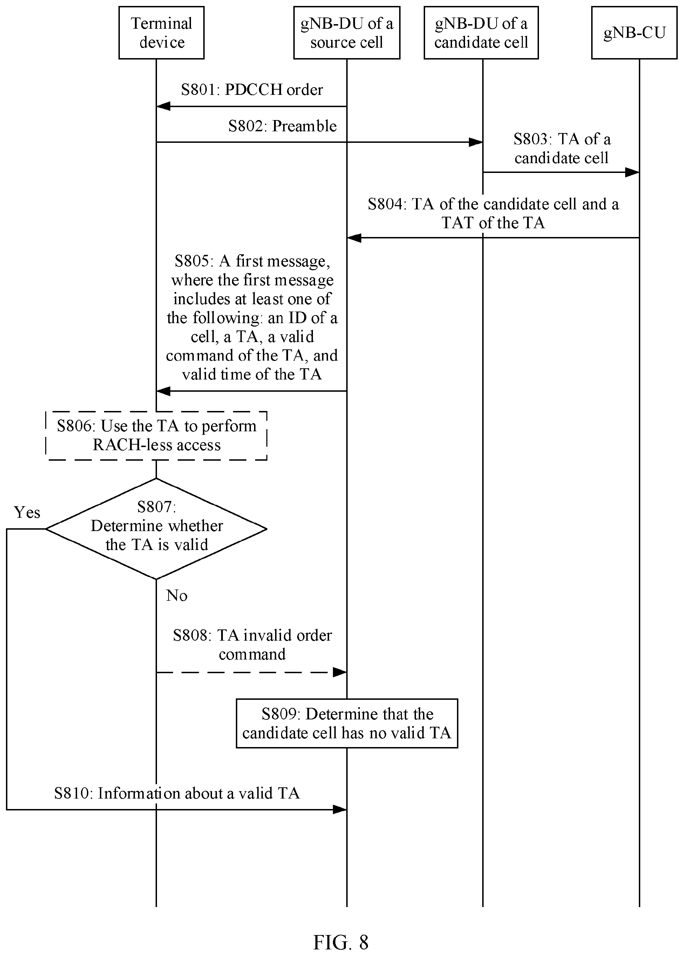

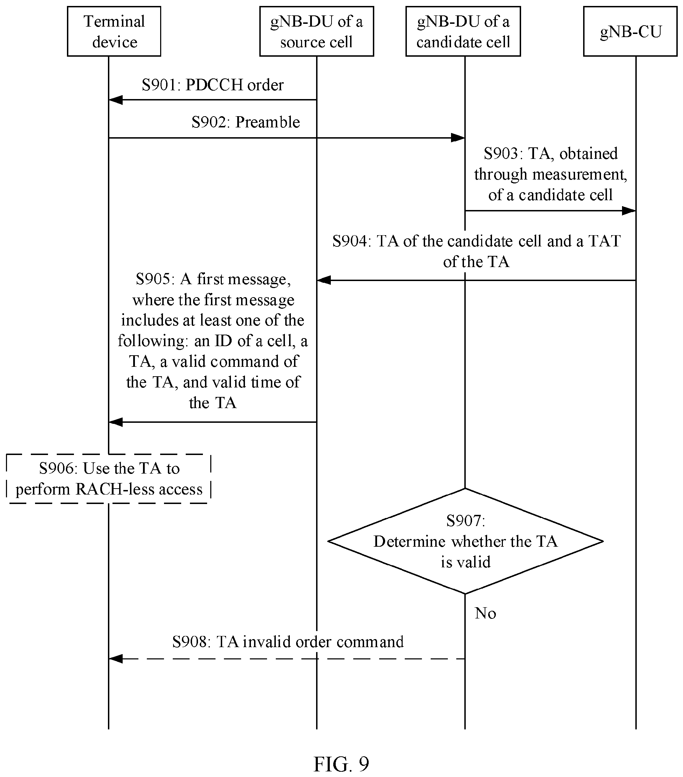

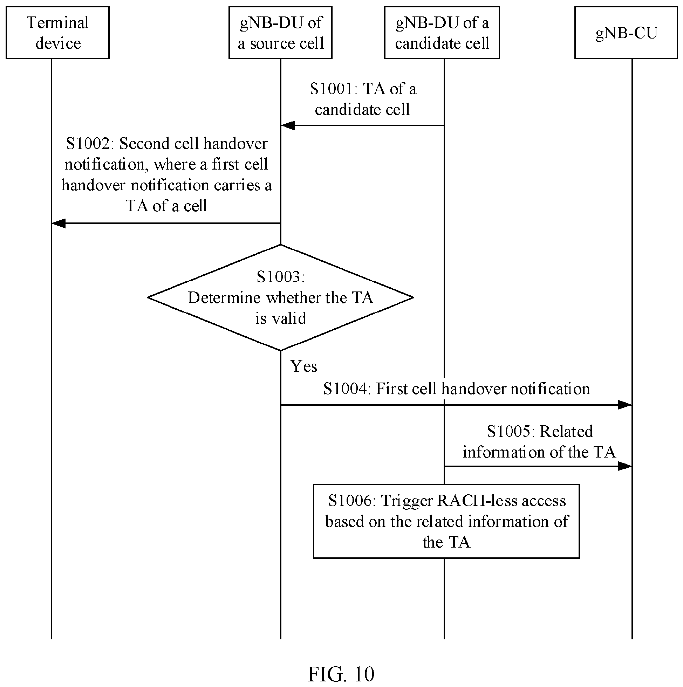

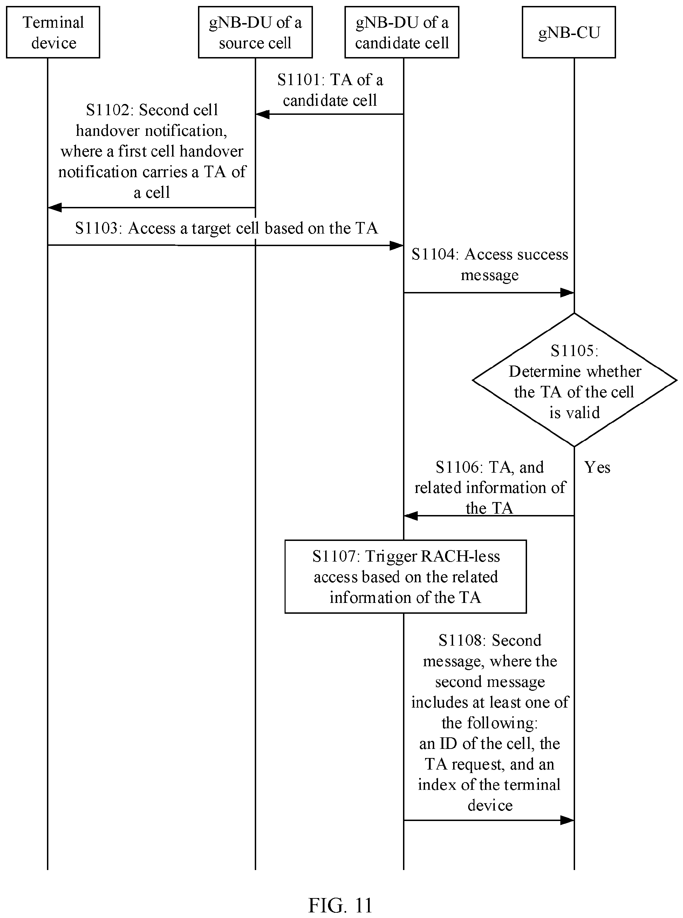

Corresponding to the method embodiment in FIG. 7, validity of the TA of the cell may be maintained by the terminal device or the network side. The method embodiment in FIG. 8 may correspond to that the terminal device maintains validity of the TA of the cell, and method embodiments in FIG. 9 to FIG. 11 may correspond to that the network side maintains validity of the TA of the cell. FIG. 9 corresponds to that the gNB-DU of the target cell on the network side maintains validity of the TA of the cell, and FIG. 10 corresponds to that the gNB-DU of the source cell on the network side maintains validity of the TA of the cell. FIG. 11 corresponds to that the gNB-CU on the network side maintains validity of the TA of the cell. The following separately describes in detail.

It should be noted that LTM switch can be performed in different scenarios, such as intra-DU, inter-DU, and inter-CU. Although specific signaling exchange content is different, the basic principles are the same. The following uses cell switch between different DUs under a same CU as an example for description. When a cross-CU scenario is involved, inter-CU interaction signaling or steps are added. For example, a source DU sends information to a source CU that controls the source DU, and the source CU then forwards the information to a target DU via the target CU that controls the target DU.

It should be noted that the terminal device communicates with a cell may be understood as that the terminal device communicates with an access network device to which the cell belongs, or the terminal device performs communication via a communication resource of the cell. For example, that the terminal device sends a message to the source cell may be understood as that the terminal device sends a message to a gNB-DU of a source cell, or the terminal device sends a message to a source access network device, or the terminal device sends a message via a communication resource of the source cell.

It should be noted that the target cell is one of candidate cells. Before cell switch occurs, the target DU may also be referred to as a candidate DU. When the terminal device receives the switch command to perform cell switch, the candidate DU that manages the target cell may also be referred to as a target DU, and a candidate cell may be referred to as a target cell. Similarly, the target DU is one of candidate DUs. When the terminal device receives the switch command to perform cell switch, a candidate DU may be referred to as a target DU. The candidate cell and the target cell in the following embodiments may be equivalently substituted. This is uniformly described herein, and is not described later.

Refer to FIG. 8. FIG. 8 is an interaction diagram of another communication method according to an embodiment of this application. A network side may include a gNB-DU of a source cell and a gNB-DU and a gNB-CU of a candidate cell. As shown in FIG. 8, the method may include the following steps. S806 to S809 are optional steps.

S801: The gNB-DU of the source cell sends a PDCCH order to a terminal device, and correspondingly, the terminal device receives the PDCCH order from the gNB-DU of the source cell.

The PDCCH order may be used to trigger the terminal device to obtain a TA of a cell, or it may be understood that the PDCCH order may be used to trigger uplink synchronization of the terminal device, and the PDCCH order carries an ID of the cell.

S802: The terminal device sends a preamble to the gNB-DU of the candidate cell. Correspondingly, the gNB-DU of the candidate cell receives the preamble from the terminal device.

The terminal device receives the PDCCH order from the gNB-DU of the source cell, that is, triggers uplink synchronization of the terminal device. The terminal device may send the preamble to the gNB-DU of the candidate cell, to obtain a TA of the candidate cell.

S803: The gNB-DU of the candidate cell sends the TA of the candidate cell to the gNB-CU. Correspondingly, the gNB-CU receives the TA of the candidate cell from the gNB-DU of the candidate cell.

After receiving the preamble from the terminal device, the gNB-DU of the candidate cell may measure a TA between the gNB-DU and the terminal device, and send the TA to the gNB-CU.

S804: The gNB-CU sends the TA of the candidate cell and a TAT of the TA to the gNB-DU of the source cell. Correspondingly, the gNB-DU of the source cell receives the TA of the candidate cell and the TAT of the TA from the gNB-CU.

In a possible implementation, the gNB-DU of the candidate cell may provide the TAT related to the TA of the current cell. Specifically, before the gNB-CU sends the TA of the candidate cell and the TAT of the TA to the gNB-DU of the source cell, the method further includes: The gNB-DU of the candidate cell sends the TA and a TAT 1 of the TA to the gNB-CU, for example, the gNB-DU of the candidate cell may send the TA and the TAT 1 of the TA to the gNB-CU through a DU-CU TA information transfer (DU-CU TA information transfer) message. That the gNB-CU sends the TA of the candidate cell and the TAT of the TA to the gNB-DU of the source cell includes: The gNB-CU sends the TA and the TAT 1 of the TA to the gNB-DU of the source cell, for example, the gNB-CU sends the TA and the TAT 1 of the TA to the gNB-DU of the source cell through a DU-CU TA information transfer message.

In a possible implementation, the gNB-CU may provide the TAT related to the TA of the candidate cell. Specifically, before the gNB-CU sends the TA of the candidate cell and the TAT of the TA to the gNB-DU of the source cell, the method further includes: The gNB-DU of the candidate cell sends the TA to the gNB-CU, for example, the gNB-DU of the candidate cell may send the TA to the gNB-CU through DU-CU TA information transfer; and the gNB-CU obtains a TAT 2 of the TA. That the gNB-CU sends the TA of the candidate cell and the TAT of the TA to the gNB-DU of the source cell includes: The gNB-CU sends the TA and the TAT 2 to the gNB-DU of the source cell, for example, the gNB-CU sends the TA and the TAT 2 of the TA to the gNB-DU of the source cell through a DU-CU TA information transfer message.

S805: The gNB-DU of the source cell sends a first message to the terminal device, where the first message includes at least one of the following: an ID of a cell, TA, a valid command of the TA, and valid time of the TA. Correspondingly, the terminal device receives the first message from the gNB-DU of the source cell.

If the TA of the candidate cell is still valid, the gNB-DU of the source cell may send the first message to the terminal device, where the first message may include one or more of the ID of the cell, the TA, the valid command of the TA, and the valid time of the TA. The first message may be a cell switch command (cell switch command) or an RAR message or another message. For other specific related descriptions, refer to the description of S701. To avoid repetition, details are not described herein again.

S806. The terminal device performs RACH-less access by using the TA.

After receiving the first message from the network side, the terminal device may determine, based on one or more of the TA of the candidate cell, the valid command of the TA, and the valid time of the TA in the first message, to use the TA to perform an RACH-less LTM procedure. For example, if the first message includes the TA of the candidate cell and the valid command of the TA, after being switched to the target cell, the terminal device may reserve the TA, and use the TA to perform RACH-less access. For another example, if the first message includes the TA of the candidate cell and the valid time of the TA, the terminal device may use the TA to perform RACH-less access within the valid time of the TA. After the terminal device is switched to the target cell, the TA can be reserved. When cell switch is triggered, if the TA is valid, RACH-less access is performed.

S807: The terminal device determines whether the TA is valid, and if the TA is not valid, perform S808; or if the TA is valid, perform S810.

In a possible implementation, the terminal device may start timing of the TAT, determine whether the TAT times out, and if the TAT does not time out, determine that the TA corresponding to the TAT is valid; or if the TAT times out, determine that the TA corresponding to the TAT is invalid.

In a possible implementation, when receiving the TA of the candidate cell, the terminal device may record/update a reference RSRP value of a downlink path loss of the candidate cell. The reference RSRP value may be preconfigured by the gNB-DU of the source cell for the terminal device.

If at least one of the following is met: timing of a corresponding TA times out when a TAT starts, a change amplitude of an RSRP value of the cell is greater than a preset threshold, the terminal device receives a new TA of a gNB-DU of the cell, the terminal device receives a TA invalid order command, or the terminal device receives a PDCCH order for the cell, the terminal device determines that the TA is invalid. That is, if timing of the corresponding TA times out when the TAT starts, and/or if the change amplitude of the RSRP value of the cell is greater than (or greater than or equal to) the preset threshold, and/or the terminal device receives the new TA of the gNB-DU of the cell, and/or the terminal device receives the TA invalid order command, and/or the terminal device receives the PDCCH order for the cell, the TA is invalid.

In a possible implementation, if at least one of the following is met: timing of the corresponding TA does not time out when the TAT starts, the change amplitude of the RSRP value of the cell is less than or equal to the preset threshold, the terminal device no longer receives a new TA of the gNB-DU of the cell, the terminal device does not receive the TA invalid order command, or the terminal device does not receive the PDCCH order for the cell, the terminal device determines that the TA is valid.

S808: The terminal device sends the TA invalid order command to the gNB-DU of the source cell. Correspondingly, the gNB-DU of the source cell receives the TA invalid order command from the terminal device.

If the TA corresponding to the TAT is invalid, the terminal device may send the TA invalid order command to the gNB-DU of the source cell. The TA invalid order command includes the ID of the cell or an ID of a TAG. Optionally, the TA invalid order command includes IDs of one or more cell or IDs of one or more TAGs.

Further, optionally, after sending the TA invalid order command to the gNB-DU of the source cell, the terminal device may release, discard, or no longer store the invalid TA.

It should be noted that steps S807 and S808 may also be performed before S805, or steps S807 and S808 may be performed after S805. It may be understood that the terminal device may maintain validity of the TA, and may maintain validity before the cell switch command, or may continue to maintain validity after the cell switch command. Therefore, an execution sequence of S805 and S807 and S808 is not limited in this embodiment of this application.

S809: The gNB-DU of the source cell determines that the candidate cell does not have a valid TA.

After receiving the TA invalid order command from the terminal device, the gNB-DU of the source cell may determine that the candidate cell does not have the valid TA.

Further, the gNB-DU of the source cell may perform S801 again, that is, the gNB-DU of the source cell sends the PDCCH order to the terminal device to obtain the valid TA corresponding to the candidate cell, where the cell indicated by the PDCCH order is the same cell as the cell corresponding to the TA, which may be understood as: The PDCCH order is used to re-obtain the valid TA corresponding to the cell.

Alternatively, the gNB-DU of the source cell sets a field corresponding to the TAC to FFF when delivering the cell switch command to the terminal device, where FFF indicates that there is no available valid timing adjustment for the LTM target cell. If no valid TA value is available, the terminal device may trigger a random access-based cell change.

S810: The terminal device sends information about the valid TA to the gNB-DU of the source cell. Correspondingly, the gNB-DU of the source cell receives the information about the valid TA from the terminal device.

The information about the valid TA includes at least one of the following: an order with the valid TA, a list of cells with valid TAs, the TA, and remaining TAT time. Optionally, if the TA is invalid, the information about the valid TA may be discarded. There may be a correspondence between the cell list and the valid TA.

The remaining time of the TAT may be used to streamline understanding between the terminal device and the network about how long the TA is still valid. For example, when TAs corresponding to a plurality of candidate cells are provided for the terminal device before the cell switch command is executed, the terminal device needs to maintain validity of the TAs. After accessing the target cell, the terminal device may provide the gNB-DU of the target cell with the criterion (remaining time of the TAT) for determining validity of one or more TAs and/or the TAs. For candidate cells that already have valid TAs, the network does not need to send a PDCCH order to re-obtain the TA, thereby saving signaling overheads.

It may be understood that the information about the valid TA sent by the terminal device to the gNB-DU of the source cell may be self-reported by the terminal device, or may be reported after an indication from the network. Further, optionally, if the terminal device receives a reporting indication from the network after reporting the information about the valid TA, the terminal device continues to report the information about the valid TA; or if the terminal device does not receive a reporting indication from the network, subsequent reporting of the information about the valid TA does not need to be performed.

Specifically, the terminal device may report the information about the valid TA after accessing the target cell. For example, reporting may be performed through a PUCCH/SR/BSR (order with the valid TA), or reporting may be performed in an RRC reconfiguration complete message (order with the valid TA, the list of cells with the valid TAs, a list of valid TAs, and indexes of corresponding cells).

If validity of the TA is maintained on the terminal device side for a long time, after accessing the target cell, the terminal device may send the existing TA to the gNB-DU of the target cell for subsequent RACH-less access.

Different from the conventional technology, during continuous RACH-less access, the terminal device needs to re-trigger a TA obtaining procedure of the candidate cell each time the terminal device is switched to a new cell. In this embodiment of this application, when the TA of the candidate cell is valid, the network side sends the first message to the terminal device, and the terminal device may determine, based on one or more of the TA of the candidate cell, the valid command of the TA, and the valid time of the TA in the first message, to continue to use the valid TA to perform RACH-less access, so as to avoid triggering the TA obtaining procedure of the candidate cell again, and reduce signaling overheads of the terminal device and the network side. In addition, the terminal device may maintain validity of the TA of the candidate cell, and maintain validity of the TA of the candidate cell based on a real-time situation of the terminal device, so that accuracy of the RACH-less access can be improved.

Refer to FIG. 9. FIG. 9 is an interaction diagram of still another communication method according to an embodiment of this application. A network side may include a gNB-DU of a source cell and a gNB-DU and a gNB-CU of a candidate cell. As shown in FIG. 9, the method may include the following steps. S906 and S908 are optional steps.

S901: The gNB-DU of the source cell sends a PDCCH order to a terminal device, and correspondingly, the terminal device receives the PDCCH order from the gNB-DU of the source cell.

S902: The terminal device sends a preamble to the gNB-DU of the candidate cell. Correspondingly, the gNB-DU of the candidate cell receives the preamble from the terminal device.

S903: The gNB-DU of the candidate cell sends a measured TA of the candidate cell to the gNB-CU. Correspondingly, the gNB-CU receives the measured TA from the gNB-DU of the candidate cell.

S904: The gNB-CU sends the TA of the candidate cell and a TAT of the TA to the gNB-DU of the source cell.

S905: The gNB-DU of the source cell sends a first message to the terminal device, where the first message includes at least one of the following: an ID of a cell, a TA, a valid command of the TA, and valid time of the TA. Correspondingly, the terminal device receives the first message from the gNB-DU of the source cell.

S906: The terminal device performs RACH-less access by using the TA.

It may be understood that S901 to S906 correspond to S801 to S806. For specific descriptions, refer to S801 to S806. To avoid repetition, details are not described herein again.

S907: A gNB-DU of a target cell determines whether the TA is valid, and if not, performs S908.

In a possible implementation, the gNB-DU of the target cell records/updates a reference RSRP value of a downlink path loss of the target cell.

If at least one or more of the following are met: timing of a corresponding TA times out when a TAT starts, a change amplitude of a reference signal receiving power RSRP value of a gNB-DU of the cell is greater than a preset threshold, and a PDCCH order of a cell corresponding to the TA is sent, the gNB-DU of the target cell determines that the TA is invalid.

The TAT is a TAT 1 configured for the cell, or a TAT 2 configured for the gNB-CU.

On the contrary, if at least one or more of the following are met: timing of the corresponding TA does not time out when the TAT starts, the change amplitude of the RSRP value of the gNB-DU of the cell is less than (or less than or equal to) the preset threshold, and the PDCCH order of the cell corresponding to the TA is not sent, the gNB-DU of the target cell determines that the TA is valid.

Further optionally, the gNB-DU of the source cell may send a cell switch notification to the gNB-DU of the target cell, where the cell switch notification includes one or more of the TA and a recent measurement result of a cell corresponding to the TA. The measurement result may be an L1 or L3 measurement result, and the gNB-DU of the target cell may update the RSRP value of the target cell based on the cell switch notification.

S908: If the TA corresponding to the TAT is invalid, the gNB-DU of the target cell sends a TA invalid order command to the terminal device.

If the TA corresponding to the TAT is invalid, the gNB-DU of the target cell may send the TA invalid order command to the terminal device. The TA invalid order command includes an ID of a candidate cell. Further, optionally, after sending the TA invalid order command to the terminal device, the gNB-DU of the target cell may release, discard, or no longer store the invalid TA.

Optionally, if the TA corresponding to the TAT is invalid, the gNB-DU of the target cell may send the PDCCH order to the terminal device, to re-obtain a TA of the target cell.

Different from the conventional technology, during continuous RACH-less access, the terminal device needs to re-trigger a TA obtaining procedure of the candidate cell each time the terminal device is switched to a new cell. In this embodiment of this application, when the TA of the candidate cell is valid, the network side sends the first message to the terminal device, and the terminal device may determine, based on one or more of the TA of the candidate cell, the valid command of the TA, and the valid time of the TA in the first message, to continue to use the valid TA to perform RACH-less access, so as to avoid triggering the TA obtaining procedure of the candidate cell again, and reduce signaling overheads of the terminal device and the network side. In addition, the gNB-DU of the target cell may maintain validity of the TA, and the network side maintains validity of the TA. This can reduce power consumption of the terminal device, and improve accuracy of RACH-less access.

Refer to FIG. 10. FIG. 10 is an interaction diagram of still another communication method according to an embodiment of this application. A network side may include a gNB-DU of a source cell and a gNB-DU and a gNB-CU of a candidate cell. As shown in FIG. 10, the method may include the following steps.

S1001: The gNB-DU of the candidate cell sends a TA of the candidate cell to the gNB-DU of the source cell. Correspondingly, the gNB-DU of the source cell receives the TA of the candidate cell from the gNB-DU of the candidate cell.

S1002: The gNB-DU of the source cell sends a second cell switch notification to the terminal device, where the second cell switch notification carries the TA of the candidate cell. Correspondingly, the terminal device receives a first cell switch notification from the gNB-DU of the source cell.

S1003: The gNB-DU of the source cell determines whether the TA is valid, and if yes, performs S1004.

If at least one of the following is met: timing of a TAT of the TA or timing of remaining duration of the TAT of the TA times out, a change amplitude of a reference signal receiving power RSRP value of the cell is greater than a preset threshold, and the terminal device receives a new TA of the gNB-DU of the cell again, the gNB-DU of the source cell determines that the TA is invalid.

The gNB-DU of the source cell determines whether the TA is valid. In a possible implementation, when receiving the TA of the gNB-DU of the candidate cell, the gNB-DU of the source cell starts timing of the TAT of the TA or timing of the remaining duration of the TAT of the TA; and if the TAT or the remaining duration of the TA does not time out, determines that the TA is valid, otherwise, determines that the TA is invalid.

The gNB-DU of the source cell starts timing of the TAT of the TA or timing of the remaining duration of the TAT of the TA, to determine whether the TA is valid. In a possible implementation, when receiving the TA of the gNB-DU of the candidate cell, the gNB-DU of the source cell may record/update a downlink path loss reference RSRP value of the candidate cell, compares an absolute value of a difference between the reference RSRP value and a real-time RSRP value with the preset threshold, and determines whether the TA of the candidate cell is valid. Specifically, if the change amplitude (increase or decrease amplitude) of the RSRP value of the candidate cell is less than the preset threshold, the terminal device does not receive a new TA of the gNB-DU of the candidate cell, and the TAT or the remaining duration of the TA does not time out (if config), the TA is valid. On the contrary, if the change amplitude of the RSRP value of the candidate cell is greater than or equal to the preset threshold, and/or the terminal device receives a new TA of the gNB-DU of the candidate cell, and/or the TAT or the remaining duration of the TA times out, the TA is invalid.

The TAT of the TA may include at least one of the following:
a TAT 1 sent by the gNB-DU of the candidate cell to the gNB-DU of the source cell; or
a TAT 2 configured by the gNB-CU for the TA sent to the gNB-DU of the source cell; or
a TAT 3 determined for the TA by the gNB-DU of the source cell.

For the TAT 1 sent by the gNB-DU of the candidate cell to the gNB-DU of the source cell, specifically, a TAT related to the TA of the candidate cell may be provided by the gNB-DU of the cell. To be specific, the gNB-DU of the candidate cell sends the TA and the TAT 1 of the TA to the gNB-CU, for example, the gNB-DU of the candidate cell may send the TA and the TAT 1 of the TA to the gNB-CU through a DU-CU TA information transfer (DU-CU TA information transfer) message. The gNB-CU sends the TA and the TAT 1 of the TA to the gNB-DU of the source cell, for example, the gNB-CU sends the TA and the TAT 1 of the TA to the gNB-DU of the source cell through a DU-CU TA information transfer message.

For the TAT 2 configured by the gNB-CU for the TA sent to the gNB-DU of the source cell, specifically, a TAT related to the TA of the candidate cell may be provided by the gNB-CU. To be specific, the gNB-DU of the candidate cell sends the TA to the gNB-CU, for example, the gNB-DU of the candidate cell may send the TA to the gNB-CU through DU-CU TA information transfer; and the gNB-CU obtains the TAT 2 of the TA. The gNB-CU sends the TA and the TAT 2 to the gNB-DU of the source cell, for example, the gNB-CU sends the TA and the TAT 2 of the TA to the gNB-DU of the source cell through a DU-CU TA information transfer message.

For the TAT 3 determined for the TA by the gNB-DU of the source cell, specifically, after receiving the TA of the candidate cell from the gNB-DU of the candidate cell, the gNB-DU of the source cell can determine the TAT for the TA, that is, determine the TAT 3 for the TA. At least one TAT 3 corresponds to at least one cell or one piece of CU-DU TA information transfer, or the at least one TAT 3 corresponds to at least one PDCCH order command. Corresponding to the at least one cell or the CU-DU TA information transfer may be understood as that TAs provided by a same piece of signaling share one TAT, that is, the TAT is started when information is received. When the TAT 3 times out, all TAs provided by the message are invalid; or when a TAT 3 corresponding to a TA of a cell is started after the TA is received, and the TAT 3 times out, the TA of the corresponding cell is invalid. That the at least one TAT 3 corresponds to the at least one PDCCH order command may be understood that TAs related to a same PDCCH order share one TAT, that is, the TAT is started when the PDCCH order is sent. When the TAT 3 times out, TAs corresponding to all candidate cells related to the message are invalid; or when a TAT 3 corresponding to a candidate cell is started after a PDCCH order related to the candidate cell is sent, and the TAT 3 times out, a TA of the corresponding cell is invalid.

S1004: The gNB-DU of the source cell sends a first cell switch notification to the gNB-CU. Correspondingly, the gNB-CU receives the first cell switch notification from the gNB-DU of the source cell.

The first cell switch notification includes: an ID of a cell, an ID of a TCI status, and related information of the TA, and the related information of the TA includes at least one of a TA of another candidate cell, a time alignment timer TAT corresponding to the TA of the another candidate cell, or remaining duration of the time alignment timer TAT corresponding to the TA of the another candidate cell.

S1005: The gNB-CU sends the related information of the TA to the gNB-DU of the target cell. Correspondingly, the gNB-DU of the target cell receives the related information of the TA from the gNB-CU.

After the gNB-CU receives the first cell switch notification from the gNB-DU of the source cell, the gNB-CU may send the related information of the TA to the gNB-DU of the target cell.

S1006: The gNB-DU of the target cell triggers RACH-less access based on the related information of the TA.

The gNB-DU of the target cell receives the related information of the TA from the gNB-CU, and may trigger RACH-less access based on the related information of the TA. Because the gNB-DU of the source cell sends the related information of the TA to the gNB-DU of the target cell via the gNB-CU, the target cell may trigger RACH-less access based on the related information of the TA. Therefore, a new TA obtaining procedure does not need to be triggered, and RACH-less access may be triggered based on TA related information of an existing candidate cell, thereby reducing an access delay and reducing signaling overheads.

Different from the conventional technology, during continuous RACH-less access, the terminal device needs to re-trigger a TA obtaining procedure of the candidate cell each time the terminal device is switched to a new cell. In this embodiment of this application, the gNB-DU of the source cell may send the cell switch notification carrying the TA of the candidate cell to the terminal device, maintain validity of the TA, and send, via the gNB-CU, the related information of the TA to the gNB-DU of the target cell when the TA is valid, so that a subsequent gNB-DU of the target cell can continue to use the valid TA to perform RACH-less access, thereby avoiding re-triggering the TA obtaining procedure of the candidate cell, and reducing signaling overheads of the terminal device and the network side. The network side (gNB-DU of the source cell) maintains validity of the TA. This can reduce power consumption of the terminal device, and improve accuracy of RACH-less access.

Refer to FIG. 11. FIG. 11 is an interaction diagram of still another communication method according to an embodiment of this application. A network side may include a gNB-DU of a source cell and a gNB-DU and a gNB-CU of a candidate cell. As shown in FIG. 11, the method may include the following steps.

S1101: The gNB-DU of the candidate cell sends a TA of the candidate cell to the gNB-DU of the source cell. Correspondingly, the gNB-DU of the source cell receives the TA of the candidate cell from the gNB-DU of the candidate cell.

S1102: The gNB-DU of the source cell sends a second cell switch notification to the terminal device, where the second cell switch notification carries the TA of the candidate cell. Correspondingly, the terminal device receives the second cell switch notification from the gNB-DU of the source cell.

S1103: The terminal device accesses a target cell based on the TA.

After receiving the second cell switch notification that is from the gNB-DU of the source cell and that carries the TA of the candidate cell, the terminal device may access the target cell based on the TA.

S1104: The gNB-DU of the candidate cell sends an access success message to the gNB-CU. Correspondingly, the gNB-CU receives the access success message from the gNB-DU of the candidate cell.

After the terminal device accesses the target cell (where the target cell belongs to a candidate cell) based on the TA, the gNB-DU of the target cell may send the access success message to the gNB-CU. The message carries an ID of the target cell and a TA request, and the TA request is used to request the gNB-CU to deliver an available TA. For example, the TA request may be a 1-bit order or enumeration TA request enumerate{ture}, and/or a cell list corresponding to the requested available TA. There may be one or more available TAs.

S1105: The gNB-CU determines whether the TA of the cell is valid; and if yes, performs step S1106.

If at least one of the following is met: timing of a TAT of the TA or timing of remaining duration of the TAT of the TA times out, a change amplitude of a reference signal receiving power RSRP value of the cell is greater than a preset threshold, and a terminal device receives a new TA of the gNB-DU of the cell again, the gNB-CU determines that the TA is invalid. For details, refer to similar descriptions in step S807 in which the terminal device determines whether the TA is valid. Details are not described herein again.

The TAT of the TA may include at least one of the following:
a TAT 1 sent by the gNB-DU of the cell to the gNB-CU; or
a TAT 2 configured by the gNB-CU for the TA sent to the gNB-DU of the cell; or
a TAT 3, determined by the gNB-DU of the source cell for the TA, sent to the gNB-CU.

For the TAT 1, of the gNB-CU, sent by the gNB-DU of the candidate cell, specifically, a TAT related to the TA of the candidate cell may be provided by the gNB-DU of the cell. To be specific, the gNB-DU of the candidate cell sends the TA and the TAT 1 of the TA to the gNB-CU, for example, the gNB-DU of the candidate cell may send the TA and the TAT 1 of the TA to the gNB-CU through a DU-CU TA information transfer (DU-CU TA information transfer) message.

For the TAT 2 configured by the gNB-CU for the TA sent to the gNB-DU of the candidate cell, specifically, a TAT related to the TA of the candidate cell may be provided by the gNB-CU. To be specific, the gNB-DU of the candidate cell sends the TA to the gNB-CU, for example, the gNB-DU of the candidate cell may send the TA to the gNB-CU through DU-CU TA information transfer; and the gNB-CU obtains the TAT 2 of the TA.

For the TAT 3, determined by the gNB-DU of the source cell for the TA, sent to the gNB-CU, Specifically, after receiving the TA of the candidate cell from the gNB-DU of the candidate cell, the gNB-DU of the source cell may determine a TAT for the TA, that is, determine the TAT 3 for the TA, and send the TAT 3 to the gNB-CU.

S1106: The gNB-CU sends the TA and related information of the TA to the gNB-DU of the candidate cell. Correspondingly, the gNB-DU of the candidate cell receives the TA and the related information of the TA from the gNB-CU.

If determining that the TA is valid, the gNB-CU may send the TA and the related information of the TA to the gNB-DU of the target cell (where the target cell belongs to the candidate cell). The related information of the TA includes a TA of another candidate cell, a time alignment timer TAT corresponding to the TA of the another candidate cell, or remaining duration of the time alignment timer TAT corresponding to the TA of the another candidate cell.

S1107: The gNB-DU of the candidate cell triggers RACH-less access based on the related information of the TA.

The gNB-DU of the target cell receives the TA and the related information of the TA from the gNB-CU, and may trigger RACH-less access based on the related information of the TA. The gNB-CU sends the related information of the TA to the gNB-DU of the target cell, so that the target cell triggers RACH-less access based on the related information of the TA. Therefore, a new TA obtaining procedure does not need to be triggered, and RACH-less access may be triggered based on TA related information of an existing candidate cell, thereby reducing an access delay and reducing signaling overheads.

S1108: The gNB-DU of the candidate cell sends a second message to the gNB-CU, where the second message includes at least one of the following: an ID of the cell, the TA request, and an index of the terminal device.

Different from the conventional technology, during continuous RACH-less access, the terminal device needs to re-trigger a TA obtaining procedure of the candidate cell each time the terminal device is switched to a new cell. In this embodiment of this application, after the terminal device is switched to the target cell, the gNB-CU may maintain validity of the TA. In a case in which the TA is valid, the gNB-CU sends the TA and the related information of the TA to the gNB-DU of the target cell. In this way, the gNB-DU of the target cell can subsequently continue to use the valid TA to perform RACH-less access, thereby avoiding re-triggering a TA obtaining procedure of the candidate cell, and reducing signaling overheads of the terminal device and the network side. The network side (gNB-CU) maintains validity of the TA. This can reduce power consumption of the terminal device, and improve accuracy of RACH-less access. After the terminal device is successfully switched to the target cell, the terminal device requests or forwards the TA (for example, includes the TA request in the access success message), so that invalid signaling overheads and maintenance costs of the target side can be avoided.

In an implementation, if cell selection is triggered by detected invalidity and attemptLTM-switch is configured, and if the selected target cell is an LTM candidate cell, an LTM cell change procedure is performed on the selected target cell, and the target cell is accessed. Further, the target cell may further send a second message to the gNB-CU, where the second message includes at least one of the following: an ID of the target cell, the TA request, and an index of the terminal device, where the TA request is used to request the gNB-CU to deliver an available TA.

In a possible implementation, the network device may preconfigure the TAT for the terminal device. After receiving the PDCCH order (as in step S801 above), the terminal device sends a preamble and starts the preconfigured TAT, and based on the TAT, determines whether the TA corresponding to the cell is valid. If the TAT does not time out, the TA corresponding to the TAT is determined to be valid. If the TAT times out, the TA corresponding to the TAT is determined to be invalid. It may be understood that, if the network does not provide the TA of the candidate cell for the terminal device until cell switch is triggered, it is unreasonable to reuse the existing TAT because the TA is actually obtained some time earlier. In this case, the terminal device starts the TAT after sending the preamble, and the original TAT value may be reused, to maintain validity of the TA in a reasonable time period.

Unified descriptions of the foregoing method embodiments:
It should be noted that the gNB-DU of the source cell or the NB-DU of the target cell sends information may be that a gNB-DU that supports the source cell or the target cell sends the information, or one cell supported by the gNB-DU that sends the information is the source cell/target cell, or the source cell or the target cell sends the information.

It should be noted that, the terminal device/gNB-DU of the source cell/gNB-DU or gNB-CU of the target cell starts to start the TAT of the TA when receiving the TA of the candidate cell, and the terminal device/gNB-DU of the source cell/gNB-DU or gNB-CU of the target cell restarts the corresponding TAT if TA update of the same cell is received again.

The foregoing describes the method embodiments provided in embodiments of this application, and the following describes an apparatus embodiment related to embodiments of this application.

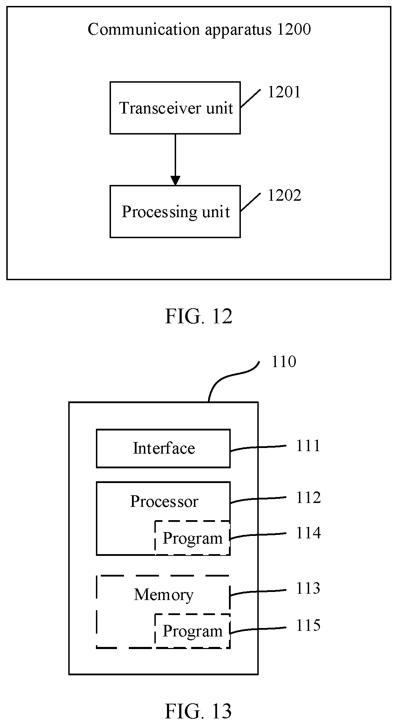

Refer to FIG. 12. FIG. FIG. 12 is a diagram of a structure of a communication apparatus according to an embodiment of this application. As shown in FIG. 12, the communication apparatus 1200 includes at least a transceiver unit 1201 and a processing unit 1202.

In a possible implementation, the communication apparatus may be a terminal device, or may be an apparatus in the terminal device (for example, a chip, or a chip system, or a circuit).

The transceiver unit 1201 is configured to receive a first message from a network side, where the first message includes at least one of the following: an ID of a cell, a TA, a valid command of the TA, and valid time of the TA. The valid command of the TA indicates that the TA is still valid after the terminal device is switched to the cell, and the TA is used to perform RACH-less access.

In a possible implementation, the apparatus further includes:
a processing unit 1202, configured to: after the transceiver unit 1201 receives the first message from the network side, if at least one of the following is met: timing of a corresponding TA times out when a TAT starts, a change amplitude of an RSRP value of the cell is greater than a preset threshold, a terminal device receives a new TA of a gNB-DU of the cell, the terminal device receives a TA invalid order command, or the terminal device receives a PDCCH order for the cell, determine that the TA is invalid, where the PDCCH order is used to obtain a TA of the cell.

In a possible implementation, the RSRP value is configured by the network side for the terminal device. Optionally, the RSRP value may be configured by a gNB-DU of a source cell on the network side for the terminal device. Optionally, the RSRP value may be configured by a cell for the terminal, and the cell may be a cell corresponding to the TA.

In a possible implementation, the processing unit 1202 is configured to: after the transceiver unit 1201 receives the first message from the network side, if at least one of the following is met: timing of the corresponding TA does not time out when the TAT starts, the change amplitude of the RSRP value of the cell is less than or equal to the preset threshold, the terminal device no longer receives a new TA of the gNB-DU of the cell, the terminal device does not receive the TA invalid order command, or the terminal device does not receive the PDCCH order for the cell, determine that the TA is valid, where the PDCCH order is used to obtain the TA of the cell.

In a possible implementation, if the TA is invalid, the transceiver unit 1201 is further configured to send a TA invalid order to a network side, where the TA invalid order command includes an ID of the cell or an ID of a TAG.

In a possible implementation, after sending the TA invalid order command to the network side, the transceiver unit 1201 is further configured to receive a PDCCH order from the network side, where the PDCCH order is used to trigger a TA obtaining procedure. The terminal device sends a preamble preamble to an indicated cell, where the cell indicated by the PDCCH order is the same cell as a cell corresponding to the TA invalid command.

In a possible implementation, if the TA is valid, the transceiver unit 1201 is further configured to send information about the valid TA to the network side, where the information about the valid TA includes at least one of the following: an order with the valid TA, a list of cells with valid TAs, the TA, and remaining TAT time.

In a possible implementation, the transceiver unit 1201 receives the first message from the network side, and is specifically configured to: receive the first message from a source cell on the network side.

In a possible implementation, the transceiver unit 1201 is further configured to receive a TA invalid order command from a gNB-DU of the cell, where the TA invalid order command includes the ID of the cell.

In a possible implementation, the first message is carried in DCI, RRC, or a MAC CE.

In a possible implementation, a communication apparatus is provided, where the communication apparatus may be a gNB-DU of a source cell, or may be an apparatus in the gNB-DU of the source cell (for example, a chip, or a chip system, or a circuit).

The transceiver unit 1201 is configured to send the first message to the terminal device, where the first message includes at least one of the following: an ID of a cell, a TA, a valid command of the TA, and valid time of the TA. The valid command of the TA indicates that the TA is still valid after the terminal device is switched to the cell, and the TA is used by the terminal device to perform RACH-less access.

In a possible implementation, the transceiver unit 1201 is further configured to receive the TA of the cell and a TAT of the TA from a gNB-CU.

In a possible implementation, the TA and the TAT of the TA include at least one of the following: the TA and a TAT 1 of the TA sent by the cell to the gNB-DU of the source cell via the gNB-CU; or the TA sent by the cell to the gNB-DU of the source cell via the gNB-CU, and a TAT 2 configured by the gNB-CU for the TA sent to the gNB-DU of the source cell.

In a possible implementation, the transceiver unit 1201 is further configured to receive a TA invalid order command from the terminal device, where the TA invalid order command includes the ID of the cell.

In a possible implementation, the transceiver unit 1201 is further configured to send a PDCCH order to the terminal device, where the PDCCH order is used to obtain a valid TA corresponding to the cell, and the cell indicated by the PDCCH is the same cell as a cell corresponding to the TA invalid command.

In a possible implementation, the transceiver unit 1201 is further configured to receive information about a valid TA from the terminal device, where the information about the valid TA includes at least one of the following: an order with the valid TA, a list of cells with valid TAs, TAs corresponding to the list of cells with the valid TAs, and remaining TAT time.

In a possible implementation, the transceiver unit 1201 is further configured to send a cell switch notification to a gNB-DU of the cell, where the cell switch notification includes at least one of the following: the TA, and a recent measurement result of a cell corresponding to the TA.

In a possible implementation, the communication apparatus may be a gNB-DU of the target cell, or may be an apparatus in a gNB-DU of the target cell (for example, a chip, or a chip system, or a circuit).

The processing unit 1202 is configured to: if at least one or more of the following are met: timing of a corresponding TA times out when a TAT starts, a change amplitude of an RSRP value of a gNB-DU of the cell is greater than a preset threshold, and a PDCCH order of a cell corresponding to the TA is sent, determine that the TA is invalid, where the PDCCH order is used to trigger a terminal device to obtain a TA of the cell, and the TAT is either a TAT 1 configured by the cell or a TAT 2 configured by the gNB-CU.

In a possible implementation, if the TA is invalid, the transceiver unit 1201 is configured to send a TA invalid order command to the terminal device, where the TA invalid order command includes an ID of the cell or an ID of a TAG.

In a possible implementation, the transceiver unit 1201 is further configured to receive a cell switch notification from the gNB-DU of the source cell, where the cell switch notification includes at least one of the following: the TA, and a recent measurement result of a cell corresponding to the TA.

The processing unit 1202 is further configured to update the RSRP value based on the cell switch notification.

In a possible implementation, the processing unit 1202 is further configured to: after obtaining a TA of the terminal device, start, based on the TAT, timing of the corresponding TA.

In a possible implementation, a communication apparatus is provided, where the communication apparatus may be a gNB-DU of a source cell, or may be an apparatus in the gNB-DU of the source cell (for example, a chip, or a chip system, or a circuit).

The transceiver unit 1201 is configured to send a first cell switch notification to the terminal device, where the first cell switch notification includes: an identifier ID of a cell, an ID of a TCI status, and related information of the TA, and the related information of the TA includes at least one of a TA of another cell, a TAT corresponding to the TA of the another cell, or remaining duration of the TAT corresponding to the TA of the another cell.

In a possible implementation, the transceiver unit 1201 is further configured to send a second cell switch notification to the terminal device, where the second cell switch notification carries the TA of the cell.

In a possible implementation, the transceiver unit 1201 is further configured to: receive the TA of the gNB-DU of the cell. If at least one of the following is met: timing of the TAT of the TA or timing of remaining duration of the TAT of the TA times out, a change amplitude of an RSRP value of the cell is greater than a preset threshold, and the terminal device receives a new TA of the gNB-DU of the cell again, the gNB-DU of the source cell determines that the TA is invalid.

In a possible implementation, the TAT corresponding to the TA includes at least one of the following: a TAT 1 sent by the gNB-DU of the cell to the gNB-DU of the source cell; or a TAT 2 configured by the gNB-CU for the TA sent to the gNB-DU of the source cell; or a TAT 3 determined for the TA by the gNB-DU of the source cell.

In a possible implementation, the transceiver unit 1201 is further configured to: when the TA of the gNB-DU of the cell is received, start timing of the TAT of the TA or timing of the remaining duration of the TAT of the TA.

In a possible implementation, after sending the second cell switch notification to the terminal device, the transceiver unit 1201 is further configured to send the TA to the gNB-DU of the cell.

In a possible implementation, the communication apparatus may be a gNB-CU, or may be an apparatus in the gNB-CU (for example, a chip, or a chip system, or a circuit).

The transceiver unit 1201 is configured to send a TA and related information of the TA to a gNB-DU of a cell, where the related information of the TA includes a TA of another cell, and a TAT corresponding to the TA of the another cell, or the TAT corresponding to the TA of the another cell.

In a possible implementation, the transceiver unit 1201 is further configured to receive an access success message from the gNB-DU, where the access success message carries an identifier ID of the cell and a TA request, and the TA request is used to request the gNB-CU to deliver an available TA.

In a possible implementation, the transceiver unit 1201 is further configured to receive the TA of the gNB-DU of the cell. If at least one of the following is met: timing of the TAT of the TA or timing of remaining duration of the TAT of the TA times out, a change amplitude of a reference signal receiving power RSRP value of the cell is greater than a preset threshold, and a terminal device receives a new TA of the gNB-DU of the cell again, the gNB-CU determines that the TA is invalid.

In a possible implementation, the TAT corresponding to the TA includes at least one of the following: a TAT 1 sent by the gNB-DU of the cell to the gNB-CU; or a TAT 2 configured by the gNB-CU for the TA sent to the gNB-DU of the cell; or a TAT 3, determined by the gNB-DU of the source cell for the TA, sent to the gNB-CU.

In a possible implementation, the transceiver unit 1201 is further configured to receive a second message from the gNB-DU of the cell, where the second message includes at least one of the following: an ID of the cell, a TA request, and an index of the terminal device, where the TA request is used to request the gNB-CU to deliver an available TA.

In a possible implementation, the transceiver unit 1201 is further configured to receive the TA of the gNB-DU of the cell, and start timing of the TAT of the TA or timing of remaining duration of the TAT of the TA.

In a possible implementation, the transceiver unit 1201 is further configured to send the TA and the related information of the TA to the gNB-DU of the cell.

In a possible implementation, the communication apparatus may be a gNB-DU of the target cell, or may be an apparatus in a gNB-DU of the target cell (for example, a chip, or a chip system, or a circuit).

The processing unit 1202 is configured to determine a TA of the cell and/or related information of the TA, where the related information of the TA includes a TA of another cell, a time alignment timer TAT corresponding to the TA of the another cell, or remaining duration of the TAT corresponding to the TA of the another cell; and the TA is the related information used to trigger random access channel RACH-less access.

In a possible implementation, the transceiver unit 1201 is configured to send a second message to the gNB-CU, where the second message includes at least one of the following: an ID of the cell, a TA request, and an index of a terminal device, where the TA request is used to request the gNB-CU to deliver an available TA.

Refer to FIG. 13. FIG. FIG. 13 is a diagram of a structure of still another communication apparatus according to an embodiment of this application. The apparatus 110 is configured to implement a function of a network element of this application. For example, the network element may be an access network device, a terminal device, a DU, or a CU. The apparatus 110 may be the network element, or an apparatus that can be mounted in the network element, or an apparatus that can be used together with the network element. This is not limited. For example, the apparatus may be a chip or a chip system. As shown in FIG. 13, the apparatus 110 includes an interface 111 and a processor 112. Optionally, the processor 112 is configured to execute a program 114. The processor 112 may store the program 114, or obtain the program 114 from another component or another device (for example, downloading from the memory 113 or from a third-party website). Optionally, the apparatus 110 includes a memory 113. The memory 113 is configured to store the program 115. The program 115 may be stored in advance, or may be loaded subsequently. Optionally, the memory 113 may be further configured to store necessary data. These components work together to provide the various functions described in this application.

The processor 112 may include one or more processors as a combination of computing devices. The processor 112 may separately include one or more of the following: a microprocessor, a microcontroller, a digital signal processor (DSP), a digital signal processing device (DSPD), an application-specific integrated circuit (ASIC), a field programmable gate array (FPGA), a programmable logic device (PLD), gate logic, transistor logic, a discrete hardware circuit, a processing circuit, or other suitable hardware, firmware, and/or a combination of hardware and software configured to perform the various functions described in this application. The processor 112 may be a general purpose processor or a dedicated processor. For example, the processor 112 may be a baseband processor or a central processing unit. The baseband processor may be configured to process a communication protocol and communication data. The central processing unit may be configured to execute a software program and process data in the software program.

The interface 111 may include any suitable hardware or software for enabling communication with one or more computer devices (for example, network elements of this application). For example, in some embodiments, the interface 111 may include wires for coupling wired connections or terminals and/or pins of wireless transceivers for coupling wireless connections. In some embodiments, the interface 111 may include a transmitter, a receiver, a transceiver, and/or an antenna. The interface may be configured to enable communication between computer devices (for example, network elements of this application) using any available protocol (for example, the 3GPP standard protocol).

Programs in this application refer to software in a broad sense. The software may be program code, a program, a subprogram, an instruction set, code, a code segment, a software module, an application program, a software application program, or the like. The program may be run in a processor and/or a computer to perform various functions and/or processes described in this application.

The memory 113 may store necessary data required when the processor 112 executes software. The memory 113 may be implemented by using any suitable storage technology. For example, the memory 113 may be any available storage medium accessible to the processor and/or the computer. Non-limiting examples of the storage medium are: a random access memory (random access memory, RAM), a read-only memory (read-only memory, ROM), an electrically erasable programmable read-only memory (electrically erasable programmable read-only memory, EEPROM), a compact disk read-only memory (compact disc read-only memory, CD-ROM), a removable media, an optical disk storage, a disk storage media, a magnetic storage device, a flash memory, a register, a status memory, a remote installation memory, a local or remote memory component, or any other medium that can carry or store software, data, or information and can be accessed by the processor/computer.

The memory 113 and the processor 112 may be disposed separately, or may be integrated together. The processor 112 may read information from the memory 113, and store and/or write information in the memory. The memory 113 may be integrated into the processor 112. The processor 112 and the memory 113 may be disposed in an integrated circuit (for example, an application-specific integrated circuit (application-specific integrated circuit, ASIC)). The integrated circuit may be disposed in a network element or another network node in the present disclosure.

Optionally, the apparatus 110 in this embodiment of this application may be configured to perform the methods described in FIG. 7 to FIG. 11 in embodiments of this application.

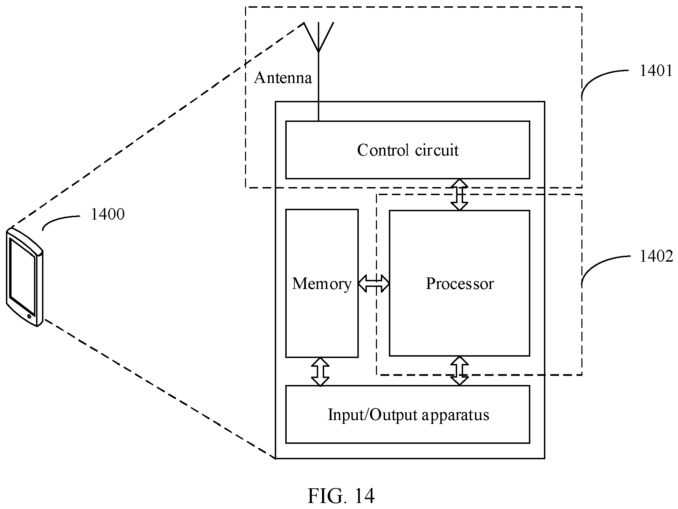

Refer to FIG. 14. FIG. 14 is a diagram of a structure of a terminal device according to an embodiment of this application. For ease of description, FIG. 14 only shows main components of the terminal device. As shown in FIG. 14, the terminal device 1400 includes a processor, a memory, a control circuit, an antenna, and an input/output apparatus. The processor is mainly configured to: process a communication protocol and communication data, control an entire terminal, execute a software program, and process data of the software program. The memory is configured to mainly store software programs and data. The radio frequency circuit is mainly configured to convert baseband signals and radio frequency signal and processing of the radio frequency signals. The antenna is mainly configured to send and receive radio frequency signals in the form of electromagnetic waves. The input/output apparatus, for example, a touch screen, a display, or a keyboard, is mainly configured to receive data input by a user and output data to the user.

After the terminal is powered on, the processor may read the software program in the storage unit, parse and execute instructions of the software program, and process data of the software program. When data needs to be sent wirelessly, after performing baseband processing on the to-be-sent data, the processor outputs a baseband signal to a radio frequency circuit, and the radio frequency circuit processes the baseband signal to obtain a radio frequency signal, and sends the radio frequency signal to the outside in a form of an electromagnetic wave via an antenna. When data is sent to the terminal, the radio frequency circuit receives the radio frequency signal via the antenna, the radio frequency signal is further converted into a baseband signal, and the baseband signal is output to the processor. The processor converts the baseband signal into data and processes the data.

For ease of description, FIG. 14 shows only one memory and one processor. In an actual terminal, there may be a plurality of processors and memories. The memory may also be referred to as a storage medium, a storage device, or the like. This is not limited in this embodiment of this application.

In an optional implementation, the processor may include a baseband processor and a central processing unit. The baseband processor is mainly configured to process a communication protocol and communication data. The central processing unit is mainly configured to control the entire terminal, execute a software program, and process data of the software program. The processor in FIG. 14 integrates functions of the baseband processor and the central processing unit. A person skilled in the art may understand that the baseband processor and the central processing unit each may be an independent processor, and are interconnected through a technology like a bus. A person skilled in the art may understand that the terminal may include a plurality of baseband processors to adapt to different network standards. The terminal may include a plurality of central processing units, to enhance its processing capability. Various components of the terminal can be connected by various buses. The baseband processor may also be described as a baseband processing circuit or a baseband processing chip. The central processor may also be described as a central processing circuit or a central processing chip. A function of processing the communication protocol and the communication data may be built in the processor, or may be stored in the storage unit in a form of software program, and the processor executes the software program to implement a baseband processing function.

In an example, an antenna and a control circuit having a transceiver function may be considered as a transceiver unit 1401 of the terminal device 1400, and a processor having a processing function may be considered as a processing unit 1402 of the terminal device 1400. As shown in FIG. 14, the terminal device 1400 includes a transceiver unit 1401 and a processing unit 1402. The transceiver unit may also be referred to as a transceiver, a transceiver, a transceiver apparatus, or the like. Optionally, a component, for implementing a receiving function, of the transceiver unit 1401 may be considered as a receiving unit, and a component, for implementing a transmitting function, of the transceiver unit 1401 may be considered as a transmitting unit, that is, the transceiver unit 1401 includes a receiving unit and a transmitting unit. For example, the receiving unit may also be referred to as a receiver machine, a receiver, a receiving circuit, or the like, and the sending unit may be referred to as a transmitter machine, a transmitter, a transmitting circuit, or the like. Optionally, the receiving unit and the sending unit may be an integrated unit, or may be a plurality of independent units. The receiving unit and the sending unit may be located in one geographical location, or may be dispersed in a plurality of geographical locations.

In an embodiment, the transceiver unit 1401 is configured to perform an operation performed by the transceiver unit 1201 in the foregoing embodiment. The processing unit 1402 is configured to perform an operation performed by the processing unit 1202 in the foregoing embodiment. The terminal device 1400 may be further configured to perform various methods performed by the terminal device in method embodiments in FIG. 7 to FIG. 11. Details are not described again.

An embodiment of this application further provides a computer-readable storage medium. The computer-readable storage medium stores a computer program. When the program is executed by a processor, the method provided in the foregoing method embodiments may be implemented.

An embodiment of this application further provides a computer program product. When the computer program product runs on a computer or a processor, the computer or the processor performs one or more steps in any one of the foregoing methods. If each component module of the foregoing device is implemented in a form of a software functional unit and sold or used as an independent product, the component module may be stored in the computer-readable storage medium.

An embodiment of this application further provides a chip system, including at least one processor and a communication interface, where the communication interface and the at least one processor are interconnected through a line, and the at least one processor is configured to run a computer program or instructions, to perform a part or all steps described in any of the method embodiments corresponding to FIG. 7 to FIG. 11. The chip system may include a chip, or may include a chip and another discrete component.

An embodiment of this application further provides a communication system. The system includes a terminal device, a gNB-DU of a source cell, a gNB-DU and a gNB-CU of a target cell. For specific descriptions, refer to the methods shown in FIG. 7 to FIG. 11.

It should be further understood that, the memory mentioned in the embodiments of this application may be a volatile memory or a non-volatile memory, or may include both a volatile memory and a non-volatile memory. The non-volatile memory may be a hard disk drive (hard disk drive, HDD), a solid state disk (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). The memory is any other medium that can be configured to carry or store desired program code in the form of instructions or data structures and can be accessed by a computer, but is not limited thereto. Alternatively, the memory in embodiments of this application may be a circuit or any other apparatus that can implement a storage function, and is configured to store a program instruction and/or data.

It should be further understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should be noted that, the memory described in this specification aims to include but not limited to these memories and any other suitable types of memories.

It should be understood that, in the embodiments of this application, sequence numbers of the foregoing processes do not mean execution sequences. The execution sequences of the processes should be determined according to functions and internal logic of the processes, and should not be construed as any limitation on the implementation processes of the embodiments of this application.

A person of ordinary skill in the art may be aware that, in combination with the examples described in embodiments provided in this specification, units and algorithm steps may be implemented by electronic hardware or a combination of computer software and electronic hardware. Whether the functions are executed by hardware or software depends on specific applications and design constraint conditions of the technical solutions. Persons skilled in the art may use different methods to implement the described functions for each particular application, but it should not be considered that such an implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the apparatus embodiments described above are merely examples. For example, the unit division is merely logical function division, and there may be another division manner in actual implementation. For example, a plurality of units or components may be combined or integrated into another system, or some features may be ignored or not performed. In addition, the displayed or discussed mutual coupling or direct coupling or communication connection may be through some interfaces, and the indirect coupling or communication connection of the apparatus or the unit may be in an electrical, mechanical, or other form.

The units described as separate components may or may not be physically separated. The components displayed as units may or may not be physical units, and may be located in one position, or may be distributed on a plurality of network units. Some or all of the units may be selected based on actual requirements to achieve the objectives of the solutions in the embodiments.

In addition, the functional units in embodiments of this application may be integrated in one processing unit, each of the units may stand alone physically, or two or more units may be integrated in one unit.

When the functions are implemented in the form of a software functional unit and sold or used as an independent product, the functions may be stored in a computer-readable storage medium. Based on such an understanding, the technical solutions of this application essentially, the part contributing to the technology, or a part of the technical solutions may be implemented in a form of software product. The computer software product is stored in a storage medium, and includes several instructions for enabling a computer device (which may be a personal computer, a server, a network device, or the like) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

The steps of the method in the embodiments of this application may be adjusted in terms of sequence, combined, and deleted based on actual needs.

The modules/units in the apparatuses in embodiments of this application may be combined, divided, and deleted according to the actual needs.

Based on the above, the foregoing embodiments are merely intended to describe the technical solutions of this application, and are not intended to limit this application. Although this application is described in detail with reference to the foregoing embodiments, a person of ordinary skill in the art should understand that modifications may still be made to the technical solutions described in the foregoing embodiments, or equivalent substitutions may be made to some of the technical features. However, these modifications or substitutions do not make the essence of the corresponding technical solution depart from the scope of the technical solutions of embodiments of this application.

## Claims

1. A timing advance TA obtaining method, wherein the method comprises:
receiving, by a terminal device, a first message from a network side, wherein the first message comprises at least one of the following: an identifier ID of a cell, a TA, a valid command of the TA, and valid time of the TA; and the valid command of the TA indicates that the TA is still valid after the terminal device is switched to the cell, and the TA is used to perform random access channel RACH-less access.

2. The method according to claim 1, wherein after receiving, by the terminal device, the first message from the network side, the method further comprises:
if at least one of the following is met: timing of a corresponding TA times out when a time alignment timer (TAT) starts, an increase or a decrease in a reference signal receiving power (RSRP) value of the cell is greater than a preset threshold, the terminal device receives a new TA of a gNB-DU of the cell, the terminal device receives a TA invalid order command, or the terminal device receives a PDCCH order for the cell, determining, by the terminal device, that the TA is invalid, wherein the PDCCH order is used to obtain a TA of the cell.

3. The method according to claim 2, wherein the RSRP value is configured by the network side for the terminal device.

4. The method according to claim 2 or 3, wherein if the TA is invalid, the method further comprises:
sending, by the terminal device, a TA invalid order command to the network side, wherein the TA invalid order command comprises the ID of the cell or an ID of a timing advance group TAG.

5. The method according to any one of claims 2 to 4, wherein if the TA is valid, the method further comprises:
sending, by the terminal device, information about a valid TA to the network side, wherein the information about the valid TA comprises at least one of the following: an order with the valid TA, a list of cells with valid TAs, the TA, and remaining TAT time.

6. The method according to claim 1, wherein the method further comprises:
receiving, by the terminal device, a TA invalid order command from a gNB-DU of the cell, wherein the TA invalid order command comprises the ID of the cell.

7. A timing advance TA obtaining method, wherein the method comprises:
sending, by a gNB-DU of a source cell, a first message to a terminal device, wherein the first message comprises at least one of the following: an identifier ID of a cell, a TA, a valid command of the TA, and valid time of the TA; and the valid command of the TA indicates that the TA is still valid after the terminal device is switched to the cell, and the TA is used by the terminal device to perform random access channel RACH-less access.

8. The method according to claim 7, wherein the method further comprises:
receiving, by the gNB-DU of the source cell, the TA of the cell and a time alignment timer TAT of the TA from a gNB-CU.

9. The method according to claim 8, wherein the TA and the TAT of the TA comprise at least one of the following:
the TA and a TAT 1 of the TA sent by the cell to the gNB-DU of the source cell via the gNB-CU; or
the TA sent by the cell to the gNB-DU of the source cell via the gNB-CU, and a TAT 2 configured by the gNB-CU for the TA sent to the gNB-DU of the source cell.

10. The method according to any one of claims 7 to 9, wherein the method further comprises:
receiving, by the gNB-DU of the source cell, a TA invalid order command from the terminal device, wherein the TA invalid order command comprises the ID of the cell.

11. The method according to any one of claims 7 to 9, wherein the method further comprises:
receiving, by the gNB-DU of the source cell, information about a valid TA from the terminal device, wherein the information about the valid TA comprises at least one of the following: an order with the valid TA, a list of cells with valid TAs, TAs corresponding to the list of cells with the valid TAs, and remaining TAT time.

12. The method according to any one of claims 7 to 9, wherein the method further comprises:
sending, by the gNB-DU of the source cell, a cell switch notification to a gNB-DU of the cell, wherein the cell switch notification comprises at least one of the following: the TA, and a recent measurement result of a cell corresponding to the TA.

13. A timing advance TA obtaining method, wherein the method comprises:
if at least one or more of the following are met: timing of a corresponding TA times out when a time alignment timer TAT starts, a change amplitude of a reference signal receiving power RSRP value of a gNB-DU of the cell is greater than a preset threshold, and a PDCCH order of a cell corresponding to the TA is sent, determining, by the gNB-DU of the cell, that the TA is invalid, wherein the PDCCH order is used to trigger a terminal device to obtain a TA of the cell, and the TAT is either a TAT 1 configured by the cell or a TAT 2 configured by the gNB-CU.

14. The method according to claim 13, wherein if the TA is invalid, the method further comprises:
sending, by the gNB-DU of the cell, a TA invalid order command to the terminal device, wherein the TA invalid order command comprises an ID of the cell.

15. The method according to claim 13, wherein the method further comprises:
receiving, by the gNB-DU of the cell, a cell switch notification from a gNB-DU of a source cell, wherein the cell switch notification comprises at least one of the following: the TA, and a recent measurement result of a cell corresponding to the TA; and
updating, by the gNB-DU of the cell, the RSRP value based on the cell switch notification.

16. The method according to any one of claims 13 to 15, wherein the method further comprises:
after obtaining a TA of the terminal device, starting, by the gNB-DU of the cell based on the TAT, timing of the corresponding TA.

17. A timing advance TA obtaining method, wherein the method comprises:
sending, by a gNB-DU of a source cell, a first cell switch notification to a gNB-CU, wherein the first cell switch notification comprises: an identifier ID of a cell, an ID of a transport configuration instruction TCI status, and related information of the TA, and the related information of the TA comprises at least one of a TA of another cell, a time alignment timer TAT corresponding to the TA of the another cell, or remaining duration of the time alignment timer TAT corresponding to the TA of the another cell.

18. The method according to claim 17, wherein the method further comprises:
sending, by the gNB-DU of the source cell, a second cell switch notification to the terminal device, wherein the first cell switch notification carries the TA of the cell.

19. The method according to claim 17 or 18, wherein the method further comprises:
receiving, by the gNB-DU of the source cell, the TA of a gNB-DU of the cell; and
if at least one of the following is met: timing of the TAT of the TA or timing of remaining duration of the TAT of the TA times out, a change amplitude of a reference signal receiving power RSRP value of the cell is greater than a preset threshold, and the terminal device receives a new TA of the gNB-DU of the cell again, determining, by the gNB-DU of the source cell, that the TA is invalid.

20. The method according to claim 19, wherein the TAT corresponding to the TA comprises at least one of the following:
a TAT 1 sent by the gNB-DU of the cell to the gNB-DU of the source cell; or
a TAT 2 configured by the gNB-CU for the TA sent to the gNB-DU of the source cell; or
a TAT 3 determined for the TA by the gNB-DU of the source cell.

21. The method according to claim 19 or 20, wherein the method further comprises:
when the gNB-DU of the source cell receives the TA of the gNB-DU of the cell, starting timing of the TAT of the TA or timing of the remaining duration of the TAT of the TA.

22. The method according to any one of claims 17 to 21, wherein after sending, by the gNB-DU of the source cell, the second cell switch notification to the terminal device, the method further comprises:
sending, by the gNB-DU of the source cell, the TA to the gNB-DU of the cell.

23. A timing advance TA obtaining method, wherein the method comprises:
sending, by a gNB-CU, the TA and related information of the TA to a gNB-DU of a cell, wherein the related information of the TA comprises a TA of another cell, and a remaining time alignment timer TAT corresponding to the TA of the another cell, or remaining duration of the TAT corresponding to the TA of the another cell.

24. The method according to claim 23, wherein the method further comprises:
receiving, by the gNB-CU, an access success message from the gNB-DU, wherein the access success message carries an identifier ID of the target cell and a TA request, and the TA request is used to request the gNB-CU to deliver the TA of the cell.

25. The method according to claim 23 or 24, wherein the method further comprises:
receiving, by the gNB-CU, the TA of the gNB-DU of the cell; and
if at least one of the following is met: timing of the TAT of the TA or timing of remaining duration of the TAT of the TA times out, a change amplitude of a reference signal receiving power RSRP value of the cell is greater than a preset threshold, and a terminal device receives a new TA of the gNB-DU of the cell again, determining, by the gNB-CU, that the TA is invalid.

26. The method according to claim 25, wherein the TAT corresponding to the TA comprises at least one of the following:
a TAT 1 sent by the gNB-DU of the cell to the gNB-CU; or
a TAT 2 configured by the gNB-CU for the TA sent to the gNB-DU of the cell; or
a TAT 3, determined by the gNB-DU of the source cell for the TA and sent to the gNB-CU.

27. The method according to claim 23 or 24, wherein the method further comprises:
receiving, by the gNB-CU, a second message from the gNB-DU of the cell, wherein the second message comprises at least one of the following: an ID of the cell, a TA request, and an index of the terminal device, wherein the TA request is used to request the gNB-CU to deliver an available TA.

28. The method according to any one of claims 23 to 27, wherein the method further comprises:
receiving, by the gNB-CU, the TA of the gNB-DU of the cell, and starting timing of the TAT of the TA or timing of remaining duration of the TAT of the TA.

29. The method according to any one of claims 23 to 27, wherein the method further comprises:
sending, by the gNB-CU, the TA and the related information of the TA to the gNB-DU of the cell.

30. A timing advance TA obtaining method, wherein the method comprises:
determining, by a gNB-DU of a cell, a TA of the cell and/or related information of the TA, wherein the related information of the TA comprises a TA of another cell, a time alignment timer TAT corresponding to the TA of the another cell, or remaining duration of the TAT corresponding to the TA of the another cell; and the TA is the related information used to trigger random access channel RACH-less access.

31. The method according to claim 30, wherein the method further comprises:
sending, by the gNB-DU of the cell, a second message to a gNB-CU, wherein the second message comprises at least one of the following: an ID of the cell, a TA request, and an index of a terminal device, wherein the TA request is used to request the gNB-CU to deliver an available TA.

32. A communication apparatus, comprising a unit configured to perform the method according to any one of claims 1 to 6, or a unit configured to perform the method according to any one of claims 7 to 12, or a unit configured to perform the method according to any one of claims 13 to 16, or a unit configured to perform the method according to any one of claims 17 to 22, or a unit configured to perform the method according to any one of claims 23 to 29, or a unit configured to perform the method according to any one of claims 30 and 31.

33. A communication apparatus, wherein the communication apparatus comprises a processor and a storage medium, the storage medium stores instructions, and when the instructions are run by the processor, the method according to any one of claims 1 to 6 is implemented, or the method according to any one of claims 7 to 12 is implemented, or the method according to any one of claims 13 to 16 is implemented, or the method according to any one of claims 17 to 22 is implemented, or the method according to any one of claims 23 to 29 is implemented, or the method according to any one of claims 30 and 31 is implemented.

34. A computer-readable storage medium, wherein the computer-readable storage medium comprises instructions, and when the instructions are run by a processor, the method according to any one of claims 1 to 6 is implemented, or the method according to any one of claims 7 to 12 is implemented, or the method according to any one of claims 13 to 16 is implemented, or the method according to any one of claims 17 to 22 is implemented, or the method according to any one of claims 23 to 29 is implemented, or the method according to any one of claims 30 and 31 is implemented.

35. A computer program product, wherein the computer program product comprises instructions, and when the instructions are run by a processor, the method according to any one of claims 1 to 6 is implemented, or the method according to any one of claims 7 to 12 is implemented, or the method according to any one of claims 13 to 16 is implemented, or the method according to any one of claims 17 to 22 is implemented, or the method according to any one of claims 23 to 29 is implemented, or the method according to any one of claims 30 and 31 is implemented.

36. A communication system, comprising the communication apparatus according to claim 32.
